# EUROPÄISCHE PATENTSCHRIFT

(11) **EP 2 776 145 B1**
(45) Veröffentlichungstag und Bekanntmachung des Hinweises auf die Patenterteilung: **08.06.2016**
(21) Anmeldenummer: 13705912.7
(22) Anmeldetag: 08.02.2013
(51) Int. Cl.: B01D 63/08, B01D 65/00

(54) **MODULARES FILTERSYSTEM**
MODULAR FILTER SYSTEM
SYSTÈME DE FILTRE MODULAIRE

(30) Priorität: 09.02.2012 DE 102012002540
(43) Veröffentlichungstag der Anmeldung: 17.09.2014
(73) Patentinhaber: Sartorius Stedim Biotech GmbH, 37079 Göttingen (DE)
(72) Erfinder: LEUTHOLD, Martin, 37079 Göttingen (DE); WEISSHAAR, Stefan, 37139 Adelebsen (DE); SCHICH, Christoph, 37075 Göttingen (DE); KRUMBEIN, Thomas, 37136 Ebergötzen (DE)
(74) Vertreter: Müller-Boré & Partner Patentanwälte PartG mbB
(86) Internationale Anmeldenummer: PCT/EP2013/000385
(87) Internationale Veröffentlichungsnummer: WO 2013/117344

(56) Entgegenhaltungen:
- EP-A2- 1 974 801
- WO-A1-01/49400
- WO-A1-91/11248
- WO-A1-96/39245
- WO-A2-2009/045264
- DE-C1- 19 860 253
- US-A- 3 943 057
- US-A- 4 702 835
- US-A- 4 751 153
- US-A- 4 886 586
- US-B2- 7 569 144

## Beschreibung

Die Erfindung betrifft ein modulares Filtersystem

Zur Gewinnung von biotechnologischen Produkten, die in Bioreaktoren durch Mikroorganismen oder Zellkulturen hergestellt werden, ist es in der Regel notwendig, diese Produkte von weiteren Stoffen, wie beispielsweise den Mikroorganismen selbst, den Nährstoffen und anderen Verunreinigungen , zu trennen. Je nach Art und Menge der im Herstellungsprozeß zu gewinnenden Produkte und abhängig vom Herstellungsprozeß sind unterschiedliche Filter mit unterschiedlichen Filtereigenschaften und unterschiedlicher Filterkapazität notwendig. Daher müssen die einzelnen Filter in verschiedenen Filterkapazitäten vorgehalten werden oder eine parallele Anordnung mehrerer Filter mit entsprechend geringerer Kapazität ist notwendig. Die parallele Anordnung mehrerer Filter bedingt jedoch eine aufwendige Handhabung, da eine Vielzahl von Schlauchverbindungen hergestellt werden muß, wodurch sich auch die Gefahr eines fehlerhaften Aufbaus erhöht. Weiter bedingt die Vielzahl von Schlauchverbindungen ein erhöhtes Totvolumen des Aufbaus und dadurch eine geringere Ausbeute, die insbesondere durch eine geringere Filtrationsleistung bezogen auf die Filtrationsfläche verursacht wird.

Modulare Filtersystem mit retentat seitig in Reihe geschalteten Modulen sind aus der US 7569 144 sowie der US 3943 057 bekannt. Die WO 01/49400 offenbart eine Parallel schaltung.

Es ist somit eine Aufgabe der Erfindung, ein Filtersystem bereitzustellen, welches einfacher zu handhaben ist und eine verbesserte Ausbeute ermöglicht.

Diese Aufgabe wird durch ein Filtersystem gemäß Anspruch 1 und 2 gelöst. Bevorzugte Ausführungsformen sind Gegenstand der abhängigen Ansprüche.

### Filtermodul gemäß einem Aspekt

Ein Teilerspekt der Erfindung betrifft ein Filtermodul umfassend:
- ein Filterelement mit
   -- zumindest einem Filtermedium, welches eine Filtratseite und eine Retentatseite des Filterelements voneinander trennt, und
   -- einem Filtermediumhalter, an welchem das Filtermedium befestigt ist und welcher zumindest einen Halterzulaufkanal und zumindest einen Halterablaufkanal aufweist,
- ein erstes Filterkassettenteil mit zumindest einem ersten Kassettenzulaufkanal und zumindest einem ersten Kassettenablaufkanal,
- ein zweites Filterkassettenteil mit zumindest einem zweiten Kassettenzulaufkanal und zumindest einem zweiten Kassettenablaufkanal,
wobei der Filtermediumhalter in einer Anordnungsposition fluiddicht zwischen dem ersten Filterkassettenteil und dem zweiten Filterkassettenteil angeordnet ist,
wobei der zumindest eine Halterzulaufkanal mit dem zumindest einen ersten Kassettenzulaufkanal und dem zumindest einen zweiten Kassettenzulaufkanal fluidisch verbunden ist, um einen Modulzulaufkanal auszubilden,
wobei der zumindest eine Halterablaufkanal mit dem zumindest einen ersten Kassettenablaufkanal und dem zumindest einen zweiten Kassettenablaufkanal fluidisch verbunden ist, um einen Modulablaufkanal auszubilden,
wobei der Modulzulaufkanal mit der Retentatseite des Filtermediums fluidisch verbunden ist und
wobei der Modulablaufkanal mit der Filtratseite des Filtermediums fluidisch verbunden ist.

Vorteilhafterweise ist das Filterelement mit dem Filtermedium mittels des ersten und zweiten Filterkassettenteils vor äußeren mechanischen und chemischen Einflüssen geschützt. Insbesondere bilden die Filterkassettenteile einen Berührungsschutz bezüglich des Filtermediums aus, so daß das Filterelement bzw. das Filtermedium nicht händisch berührbar ist. Dadurch wird vorteilhafterweise eine mechanische Beschädigung des Filtermediums bzw. eine Kontamination durch eine Berührung vermieden. Weiter vorteilhafterweise können die Filtermedien aufgrund des Berührungsschutzes dünner hergestellt werden, da die Filtermedien für eine geringere mechanische Belastung ausgelegt sein müssen. Insbesondere müssen die Filtermedien nicht für eine punktuelle Belastung ausgelegt sein. Weiter sind die Filtermedien in den Filtermodulen von weiteren Filtermedien in weiteren an dem Filtermodul anordenbaren Filtermodulen aufgrund der Filterkassettenteile stets voneinander beabstandet anordenbar. Dadurch wird vorteilhafterweise eine mechanische Beanspruchung zwischen den einzelnen Filtermedien vermieden.

Das Filterelement umfaßt zumindest ein Filtermedium, wie beispielsweise einen Membranfilter, einen Tiefenfilter und/oder einen Adsorptionsmembranfilter. Insbesondere kann das Filterelement genau ein Filtermedium aufweisen. Es versteht sich jedoch, daß das Filterelement auch mehrere gleichartige oder verschiedene Filtermedien umfassen kann. So kann das Filterelement mehrere Membranfilter in mehreren Lagen aufweisen. Ebenso können mehrere Tiefenfilter oder Adsorptionsmembranfilter in mehreren Lagen in dem Filterelement zusammengefaßt sein.

Als Membranfilter sind Mikrofiltrationsmembranen und Ultrafiltrationsmembranen bevorzugt. Unter Adsorptionsmembranfiltern sollen mikroporöse Membranfilter verstanden werden, die auf ihrer inneren und/oder äußeren Oberfläche funktionelle Gruppen tragen, welche mit in einem zu filtrierenden Fluid enthaltenen Substanzen in physikalische und/oder chemische Wechselwirkung treten. Unter chemischer Wechselwirkung soll nachfolgend jedwede kovalente, ionogene und/oder auf elektrostatischen oder hydrophoben (z. B. Van-der-Waals-Wechselwirkung) Interaktionen beruhende Bindungswechselwirkung zwischen den funktionellen Gruppen der Substanzen und dem Adsorptionsmembranfilter verstanden werden. Besonders bevorzugt weist der Adsorptionsmembranfilter funktionelle Gruppen auf, welche ausgewählt sind aus der Gruppe der Ionenaustauscher, salztoleranten Liganden, Chelatbildner, thiophilen oder hydrophoben Liganden verschiedener Kettenlängen und Konfigurationen, "Reversed-Phase"-Liganden, reaktiven und anderen Farbstoffen, der organischen und anorganischen Verbindungen, der Affinitätsliganden und der Proteine (insbesondere Enzyme).

Weiter können auch verschiedene Filter in einem Filterelement zusammengefaßt sein. Beispielsweise können mehrere Lagen eines Membranfilters zwischen zumindest zwei Lagen eines Tiefenfilters oder zwischen zwei Sieblagen angeordnet sein, um die Membranfilterlagen vor mechanischer Beanspruchung bzw. vor einem Zusetzen zu schützen.

Als beispielhafte Filtermedien können Vliese, Filze, Spinnvliese, poröse Festkörper, Sintermetalle, Keramiken, Gewebe, Papier, Membranen und ähnliches allein oder in Kombination verwendet werden. Weiter können Anschwemmfilter mit Filterhilfsmitteln (beispielsweise Kieselgur und/oder adsorptive Partikel) eingesetzt werden, wobei die Filterhilfsmittel gemeinsam mit dem zu filtrierenden Fluid zugeführt werden oder bereits in dem Filtermodul vorliegen. Das Filtermedium trennt eine Filtratseite bzw. Permeatseite und eine Retentatseite des Filterelements voneinander. Die Begriffe Filtrat und Permeat sowie daraus abgeleitete Begriffe können synonym verwendet werden. Das Filtermedium wird von der Retentatseite her mit einem zu filternden Fluid beaufschlagt. Das Fluid kann eine Flüssigkeit umfassen, in welcher feste Stoffe als Suspension enthalten sind und/oder in welcher Stoffe gelöst sind. Das Fluid kann alternativ oder zusätzlich ein Gas bzw. ein Aerosol umfassen. Die von dem Filtermedium zurückgehaltenen Substanzen verbleiben auf der Retentatseite, sofern sie nicht in das Filtermedium eindringen. Das filtrierte Fluid gelangt durch das Filtermedium auf die Filtratseite bzw. die Permeatseite des Filtermediums. Zwischen der Retentatseite und der Permeatseite herrscht eine Fluiddruckdifferenz. Bevorzugt ist das Filtermedium im wesentlichen plattenförmig bzw. flach ausgebildet, wobei die Retentatseite und die Permeatseite jeweils gegenüberliegende bzw. entgegengesetzte Seiten des plattenförmigen Filtermediums ausbilden. Mit anderen Worten können die Retentatseite und die Permeatseite einen kürzeren Abstand zueinander aufweisen, als die beiden weiteren Längserstreckungen des Filtermediums. Dadurch ist die Fließrichtung des Fluids durch das Filtermedium im wesentlichen senkrecht zu der durch die Retentatseite bzw. die Permeatseite aufgespannte Ebene orientiert, so daß der Fließweg des Fluids durch das Filtermedium insbesondere minimal ist und der durchströmte effektive Querschnitt des Filtermediums maximal ist.

Das Filtermedium wird mittels des Filtermediumhalters, an welchem das Filtermedium befestigt ist, in seiner Position bzw. in seiner Form gehalten. Vorzugsweise ist der Filtermediumhalter zumindest bereichsweise aus einem rückstellfähigen Material ausgebildet. Bevorzugt ist der Filtermediumhalter zumindest bereichsweise, besonders bevorzugt vollständig, aus einem elastischen Material wie beispielsweise einem Silikon, einem Gummi bzw. einem thermoplastischen Elastomer (TPE) ausgebildet.

Vorzugsweise ist das Filtermedium durch Verschmelzen oder Vergießen eines Bereiches des Filtermediums mit einem Bereich des Filtermediumhalters, dem Filtermediumhaltebereich, an dem Filtermediumhalter befestigt. Beispielsweise kann der Filtermediumhalter durch Spritzgießen hergestellt werden, wobei das Filtermedium während des Spritzgießens in der Spritzgußform derart angeordnet ist, daß ein Rand des Filtermediums mit oder in dem elastischen Material des Filtermediumhalters verschmolzen bzw. darin eingespritzt bzw. eingegossen wird, wodurch eine dichte Verbindung zwischen dem Filtermedium und dem Filtermediumhaltebereich des Filtermediumhalters erzeugt wird.

Die Anordnungsposition bezeichnet den Zustand des Filtermoduls, in welchem das Filtermodul an weitere Filtermodule angeordnet und mit diesen verbunden werden kann. In der Anordnungsposition liegt das Filterelement zumindest bereichsweise mit der Retentatseite an einer ersten Filterelementanordnungsseite des ersten Filterkassettenteils an. Insbesondere kann ein erster Dichtbereich des Filterelements mit einem komplementären Dichtbereich des ersten Filterkassettenteils mechanisch bzw. fluiddicht in Kontakt stehen. Besonders bevorzugt ist der erste Dichtbereich an dem Filtermediumhalter ausgebildet. Insbesondere kann der bevorzugt aus einem rückstellfähigen Material bzw. Elastomer ausgebildete Filtermediumhalter den ersten Dichtbereich ausbilden. Der komplementäre Dichtbereich des ersten Filterkassettenteils kann eine Dichtnase bzw. einen Dichtsteg umfassen, welcher bevorzugt einstückig mit dem ersten Filterkassettenteil ausgebildet ist. Die Dichtnase bzw. der Dichtsteg kann etwa 0,5 mm bis etwa 2 mm, bevorzugt etwa 1 mm, in Richtung des Filterelementes vorragen. Insbesondere für den Fall, daß der erste Dichtbereich des Filterelements aus einem rückstellfähigen Material bzw. einem Elastomer ausgebildet ist, kann im Bereich des Dichtstegs ein erhöhter Anpreßdruck zwischen dem Filterelement und dem ersten Filterkassettenteil erreicht werden, so daß vorteilhafterweise eine verbesserte Dichtwirkung erzielt wird.

Vorzugsweise ist das Filtermedium durch Klemmen und/oder Kleben eines Bereiches des Filtermediums mit dem Filtermediumhaltebereich an dem Filtermediumhalter befestigt.

Beispielsweise kann der Filtermediumhalter zweiteilig ausgebildet sein, wobei der erste Teil des Filtermediumhalters eine Filtermediumaufnahme aufweist, welche auslegt ist, das Filtermedium entlang einer Einführrichtung aufzunehmen. Weiter kann der zweite Teil des Filtermediumhalters mit einem Klemmbereich, der im wesentlichen komplementär zur Filtermediumaufnahme ausgebildet ist, zumindest bereichsweise in die Filtermediumaufnahme einführbar sein, um das Filtermedium in der Filtermediumaufnahme festzuklemmen. Zusätzlich kann das Filtermedium mittels eines Klebemittels, beispielsweise mit einem Silikon, in der Filtermediumaufnahme festgeklebt sein.

Bevorzugt kann die Filtermediumaufnahme zumindest eine Dichtkontur, beispielsweise eine Dichtlippe, aufweisen, welche die Filtermediumaufnahme umlaufen kann. Weiter bevorzugt kann der Klemmbereich ebenfalls zumindest eine Dichtkontur, beispielsweise eine Dichtlippe, aufweisen, welche den Klemmbereich umlaufen kann. Das Filtermedium kann zwischen den Dichtkonturen der Filtermediumaufnahme und des Klemmbereichs angeordnet sein bzw. eingeklemmt sein, wodurch vorteilhafterweise die Filtratseite und die Retentatseite des Filtermediums fluiddicht getrennt werden kann. Es versteht sich, daß auch zwei, drei, vier oder mehr Dichtkonturen parallel zueinander angeordnet sein können.

Vorzugsweise ist das Filtermedium kraftschlüssig und/oder formschlüssig an dem Filtermediumhalter angeordnet. Beispielsweise kann der Filtermediumhalter eine Nut aufweisen, in welche das Filtermedium eingesetzt werden, um darin gehalten zu werden. Insbesondere kann das Filtermedium in der Nut festgeklemmt und optional festgeklebt werden. Alternativ kann das Filtermedium ohne ein Festklemmen mittels eines Klebemittels, beispielsweise eines Polymers bzw. eines Silikonklebers, an dem Filtermediumhalter befestigt sein. Bevorzugt ist der Filtermediumhalter einstückig ausgebildet.

Um das Einsetzen des Filtermediums in die Nut zu erleichtern, kann der Filtermediumhalter insbesondere flexibel und/oder rückstellfähig dehnbar ausgebildet sein. Dadurch kann eine Öffnung im Filtermediumhalter durch ein Dehnen des Filtermediumhalters derart vergrößerbar sein, um das Filtermedium in die Öffnung einsetzen zu können und insbesondere in die Nut einbringen zu können. Danach kann der Filtermediumhalter aufgrund seiner Rückstellfähigkeit in seine ursprüngliche Form zurückkehren, wodurch sich die Öffnung derart verkleinert, daß das Filtermedium nicht wieder aus dem Filtermediumhalter bzw. aus der Nut entfernt werden kann.

Vorzugsweise ist das Filtermedium in dem Filtermediumhalter eingeklemmt, wobei durch das rückstellfähige Material des Filtermediumhalters eine Anpreßkraft auf das Filtermedium angelegt ist. Mit anderen Worten kann das Filtermedium in dem Filtermedium bzw. in dessen Nut eingeklemmt werden, wobei eine auf das Filtermedium wirkende mechanische Spannung bzw. Anpreßkraft durch das rückstellfähige bzw. elastische Material des Filtermediumhalters erzeugt wird. Bevorzugt kann der Filtermediumhalter um das Filtermedium herum gespannt werden, so daß am Rand des Filtermediums ein Anpreßdruck erzeugt wird. Insbesondere kann das Filtermedium in einer im Filtermediumhalter ausgebildeten Nut angeordnet sein, wobei der Anpreßdruck durch den Boden der Nut auf das Filtermedium ausgeübt werden kann. Die Dichtwirkung wird dann durch das Anpressen des Filtermediumhalters an dem Filtermedium erzeugt. Dabei kann ein Rand des Filtermediums von etwa 2 mm bis etwa 20 mm, bevorzugt von etwa 5 mm bis etwa 10 mm als Dichtfläche fungieren und insbesondere in die Nut des Filtermediumhalters eingeführt sein.

Bevorzugt kann im Inneren der Nut des Filtermediumhalters zumindest eine Dichtkontur bzw. Dichtlippe ausgebildet sein, welche ausgelegt ist, mit der Retentatseite des in der Nut angeordneten Filtermediums zu kontaktieren. Weiter bevorzugt kann im Inneren der Nut des Filtermediumhalters zumindest eine Dichtkontur bzw. Dichtlippe ausgebildet sein, welche ausgelegt ist, mit der Permeatseite des in der Nut angeordneten Filtermediums zu kontaktieren. Insbesondere können die zwei Dichtkonturen bzw. Dichtlippen auf gegenüberliegenden bzw. entgegengesetzten Seiten der Nut ausgebildet sein. Die Dichtkonturen bzw. Dichtlippen können dabei aus einem rückstellfähigen bzw. elastischen Material ausgebildet sein und sich insbesondere durch das Anordnen des Filtermediums zumindest bereichsweise rückstellfähig bzw. elastisch verformen. Besonders bevorzugt sind die Dichtkonturen bzw. Dichtlippen einstückig mit dem Filtermediumhalter ausgebildet.

Weiter bevorzugt kann das Filtermedium aus zwei, drei oder mehr Lagen ausgebildet sein bzw. können zwei, drei oder mehrere Filtermedien in dem Filtermediumhalter aufgenommen bzw. daran befestigt sein. Dabei kann das Filtermedium durch eine Vielzahl von identischen Lagen oder durch verschiedene Lagen ausgebildet sein.

Entsprechend liegt das Filterelement in der Anordnungsposition zumindest bereichsweise mit der Filtratseite an einer zweiten Filterelementanordnungsseite des zweiten Filterkassettenteils an. Insbesondere kann ein zweiter Dichtbereich des Filterelements mit einem komplementären Dichtbereich des zweiten Filterkassettenteils mechanisch bzw. fluiddicht kontaktieren. Besonders bevorzugt ist der zweite Dichtbereich an dem Filtermediumhalter ausgebildet. Insbesondere kann der bevorzugt aus einem rückstellfähigen Material bzw. Elastomer ausgebildete Filtermediumhalter den zweiten Dichtbereich ausbilden. Der komplementäre Dichtbereich des zweiten Filterkassettenteils kann eine Dichtnase bzw. einen Dichtsteg umfassen, welcher bevorzugt einstückig mit dem zweiten Filterkassettenteil ausgebildet ist. Die Dichtnase bzw. der Dichtsteg kann etwa 0,5 mm bis etwa 2 mm, bevorzugt etwa 1 mm, in Richtung des Filterelementes vorragen. Insbesondere für den Fall, daß der zweite Dichtbereich des Filterelements aus einem rückstellfähigen Material bzw. einem Elastomer ausgebildet ist, kann im Bereich der Dichtnase ein erhöhter Anpreßdruck zwischen dem Filterelement und dem zweiten Filterkassettenteil erreicht werden, so daß vorteilhafterweise eine verbesserte Dichtwirkung erzielt wird.

Bevorzugt weist das Filtermedium eine geringere Dicke als der Filtermediumhalter auf. Es versteht sich jedoch, daß die Dicke des Filtermediums gleich zu der Dicke des Filtermediumhalters sein kann, so daß die Retentatseite des Filtermediums mit der Retentatseite des Filtermediumhalters bündig abschließt und die Filtratseite des Filtermediums mit der Filtratseite des Filtermediumhalters bündig abschließt.

Das Filtermedium kann insbesondere derart an dem Filtermediumhalter befestigt sein, daß in der Anordnungsposition zwischen der Retentatseite des Filtermediums bzw. des Filterelements und der ersten Filterelementanordnungsseite des ersten Filterkassettenteils eine Retentatkammer ausgebildet ist. Dazu kann das erste Filterkassettenteil eine Retentatausnehmung aufweisen, so daß eine Retentatkammer auch dann ausgebildet ist, wenn die Retentatseite des Filtermediums mit der Retentatseite des Filtermediumhalters bündig bzw. flächig abschließt. Alternativ oder zusätzlich kann die Retentatkammer zumindest bereichsweise durch das Filterelement ausgebildet sein, bevorzugt dadurch, daß durch den Filtermediumhalter und das Filtermedium eine Ausnehmung ausgebildet ist. Beispielsweise kann die Retentatseite des Filtermediumhalters, bezogen auf die Retentatseite des Filtermediums, in Richtung des ersten Filterkassettenteils vorstehen.

Das Filtermedium kann weiter derart an dem Filtermediumhalter befestigt sein, daß in der Anordnungsposition zwischen der Filtratseite des Filtermediums bzw. des Filterelements und der zweiten Filterelementanordnungsseite des zweiten Filterkassettenteils eine Filtratkammer ausgebildet ist. Dazu kann das zweite Filterkassettenteil eine Filtratausnehmung aufweisen, so daß eine Filtratkammer auch dann ausgebildet ist, wenn die Filtratseite des Filtermediums mit der Filtratseite des Filtermediumhalters bündig bzw. flächig abschließt. Alternativ oder zusätzlich kann die Filtratkammer zumindest bereichsweise durch das Filterelement ausgebildet sein, bevorzugt dadurch, daß durch den Filtermediumhalter und das Filtermedium eine Ausnehmung ausgebildet ist. Beispielsweise kann die Filtratseite des Filtermediumhalters, bezogen auf die Filtratseite des Filtermediums, in Richtung des zweiten Filterkassettenteils vorstehen.

Um das zu filternde Fluid an der Retentatseite des Filtermediums bzw. in der Retentatkammer des Filtermoduls bereitzustellen, kann eine fluidische Verbindung zwischen dem Modulzulaufkanal und der Retentatkammer bzw. der Retentatseite des Filtermediums mittels zumindest eines Modulzulaufverbindungskanals ausgebildet sein, wobei der zumindest eine Modulzulaufverbindungskanal zumindest teilweise in dem Filtermediumhalter und/oder dem ersten Filterkassettenteil ausgebildet sein kann. Entsprechend kann zumindest ein Modulablaufverbindungskanal vorgesehen sein, um das filtrierte Fluid von der Filtratseite zu dem Modulablaufkanal abzuführen. Mit anderen Worten ist die Filtratseite des Filtermediums bzw. die Filtratkammer in der Anordnungsposition mittels des zumindest einen Modulablaufverbindungkanals fluidisch mit dem Modulablaufkanal des Filtermoduls verbunden. Der zumindest eine Modulablaufverbindungskanal kann zumindest teilweise in dem Filtermediumhalter und/oder dem zweiten Filterkassettenteil ausgebildet sein.

Es versteht sich, daß ein einziger Modulzulaufkanal oder zwei oder mehr Modulzulaufkanäle vorgesehen sein können, die jeweils mit einem zugeordneten Modulzulaufverbindungskanal mit der Retentatkammer fluidisch verbunden sind. Entsprechend können ein einziger Modulablaufkanal oder zwei oder mehr Modulablaufkanäle vorgesehen sein, die jeweils mit einem zugeordneten Modulablaufverbindungskanal mit der Filtratkammer fluidisch verbunden sind.

Der zumindest eine Modulzulaufkanal umfaßt jeweils einen zugeordneten ersten Kassettenzulaufkanal des ersten Filterkassettenteils, jeweils einen zugeordneten zweiten Kassettenzulaufkanal des zweiten Filterkassettenteils und jeweils einen zugeordneten Halterzulaufkanal, welche in der Anordnungsposition des Filtermoduls miteinander fluidisch verbunden sind. Bevorzugt sind die zugehörigen ersten und zweiten Kassettenzulaufkanäle und der Halterzulaufkanal zueinander formkongruent ausgebildet, um in der Anordnungsposition einen durchgehenden Modulzulaufkanal mit einem im wesentlichen konstanten Querschnitt auszubilden. Dazu können die ersten und zweiten Filterkassettenteile sowie der Filtermediumhalter derart passend zueinander angeordnet werden, das die Querschnitte der ersten und zweiten Kassettenzulaufkanäle und des Halterzulaufkanals entlang einer Richtung parallel zur Fluidfließrichtung F zur Deckung gelangen.

In analoger Weise kann der zumindest eine Modulablaufkanal jeweils einen zugeordneten ersten Kassettenablaufkanal des ersten Filterkassettenteils, jeweils einen zugeordneten zweiten Kassettenablaufkanal des zweiten Filterkassettenteils und jeweils einen zugeordneten Halterablaufkanal umfassen, welche in der Anordnungsposition des Filtermoduls miteinander fluidisch verbunden sind. Bevorzugt sind die zugehörigen ersten und zweiten Kassettenablaufkanäle und der Halterablaufkanal zueinander formkongruent ausgebildet, um in der Anordnungsposition einen durchgehenden Modulablaufkanal mit einem im wesentlichen konstanten Querschnitt auszubilden. Dazu können die ersten und zweiten Filterkassettenteile sowie der Filtermediumhalter derart passend zueinander angeordnet werden, daß die Querschnitte der ersten und zweiten Kassettenablaufkanäle und des Halterablaufkanals entlang einer Richtung parallel zur Fluidfließrichtung F zur Deckung gelangen.

Die einzelnen Abschnitte des Modulzulaufkanals und des Modulablaufkanals in dem Filtermodul werden in der Anordnungsposition miteinander fluiddicht verbunden. Bevorzugt erfolgt das fluiddichte Verbinden durch ein Anordnen des Filtermediumhalters zwischen dem ersten Filterkassettenteil und dem zweiten Filterkassettenteil, wobei ein Anpreßdruck angelegt wird, um die Retentatseite des Filterelements an die erste Filterelementanordnungsseite des ersten Filterkassettenteils und die Filtratseite des Filterelements an die zweite Filterelementanordnungsseite des zweiten Filterkassettenteils zu pressen, wodurch eine hinreichende Fluiddichtigkeit erzeugt wird, welche ein Austreten von Fluid an den Verbindungsflächen zwischen dem Filterelement und dem ersten bzw. zweiten Filterkassettenteil verhindert.

Vorzugsweise sind das erste Filterkassettenteil und das zweite Filterkassettenteil mittels einer Verriegelungseinrichtung verriegelbar bzw. miteinander verbindbar. Bevorzugt kann das erste Filterkassettenteil zumindest eine Rasteinrichtung aufweisen, welche in der Anordnungsposition mit einer zugeordneten komplementären Rasteinrichtung verrastet bzw. verriegelt ist. Zum Verrasten bzw. Verriegeln ist die zumindest eine Rasteinrichtung entlang einer Anordnungsrichtung A in die zugeordnete komplementäre Rasteinrichtung einführbar, bis die Verrastung bzw. die Verriegelung erfolgt und das Filtermodul in die Anordnungsposition übergeht. Weiter bevorzugt kann die Verriegelung bzw. Verrastung nicht mehr gelöst werden, sobald sich das Filtermodul in der Anordnungsposition befindet. Vorteilhafterweise wird dadurch verhindert, daß das Filtermodul nachträglich geöffnet wird, so daß eine mechanische Beschädigung des Filtermediums verhindert wird. Bevorzugt ist das Filtermodul als Einwegmodul konzipiert, welches nach dem Gebrauch verworfen bzw. vernichtet wird, so daß ein Zugriff auf das Filterelement bzw. das Filtermedium nicht notwendig ist. Vielmehr können Kontaminationen durch das nach dem Gebrauch in dem Filtermodul angesammelte Retentat verhindert werden, da dieses in dem nicht öffenbaren Filtermodul verbleibt.

Vorzugsweise weisen das erste Filterkassettenteil und/oder das zweite Filterkassettenteil eine höhere Steifigkeit auf als der Filtermediumhalter. Mit anderen Worten ist das Elastizitätsmodul und/oder das Schermodul des ersten und/oder des zweiten Filterkassettenteils größer als das Elastizitätsmodul und/oder das Schermodul des Filtermediumhalters. Beispielsweise können die Filterkassettenteile aus einem starren Material wie Polyethylen (PE), Polypropylen (PP), Polyurethan (PU), Acrylnitril-Butadien-Styrol-Copolymerisat (ABS), Polyamid (PA) oder Polycarbonat (PC) ausgebildet sein. Dagegen ist der Filtermediumhalter bevorzugt aus einem elastischen Material, wie beispielsweise einem Silikon, einem Gummi bzw. einem thermoplastischen Elastomer (TPE) ausgebildet. Besonders bevorzugt sind die Materialien der Filterkassettenteile und des Filtermediumhalters mittels gamma-Strahlung sterilisierbar.

Vorteilhafterweise resultiert aus der erhöhten Starrheit bzw. Steifigkeit der Filterkassettenteile bezüglich Dehnung, Stauchung und/oder Torsion gegenüber dem Filtermediumhalter eine verbesserte Maßhaltigkeit des gesamten Filtermoduls.

Ferner können die Filterkassettenteile von außen auf das Filtermodul wirkenden Kräften besser standhalten, insbesondere wenn mehrere Filtermodule in einer Anordnung zusammengefaßt sind. Beispielsweise können mehrere Filtermodule beim betriebsgemäßen Gebrauch mit einer Andruckkraft K beaufschlagt werden, welche mehrere Filtermodule zusammenpreßt, um eine fluiddichte Verbindung zwischen den Filtermodulen zu erhalten. Es ergibt sich auch eine verbesserte Maßhaltigkeit des zwischen den Filterkassettenteilen gehaltenen Filtermediumhalters unter Betriebsbedingungen, also bei Anliegen eines inneren bzw. äußeren Drucks durch das zu filternde Fluid bzw. durch das Anliegen eines Anpreßdruckes, welcher die einzelnen Filtermodule in der Anordnung zusammenhält. Aufgrund der besseren und während des Betriebes konstanten Maßhaltigkeit des Filtermediumhalters und damit des Filtermediums wird vorteilhafterweise vermieden, daß sich beim parallelen Betrieb mehrerer identischer Filtermodule eine bevorzugte Durchströmung eines einzelnen Filtermoduls ergibt. Dies gilt es zu vermeiden, da sonst ein Durchbrechen der zu filternden Substanz in einem der Filtermodule der Anordnung zu einem Zeitpunkt erfolgen kann, bei welchem in den anderen Filtermodulen noch Filterkapazität ungenutzt ist. Vorteilhafterweise wird durch das Vermeiden des Durchbrechens die Filterung verbessert und die Filterkapazität erhöht, wodurch auch die Kosten des Filterprozesses gesenkt werden können, insbesondere bei auf adsorptiven Prozessen beruhenden Filtrationen.

Ein weiterer Vorteil ist, daß das Filtermedium vor mechanischen Einflüssen bzw. Verformungen durch von außen wirkende Kräfte geschützt ist. Dadurch können die Filtermedien vorteilhafterweise bei gleicher Kapazität dünner hergestellt werden. Dadurch können kostengünstigere Filtermodule vorgesehen werden.

Vorzugsweise weisen das erste Filterkassettenteil eine erste Filterelementaufnahme und/oder das zweite Filterkassettenteil eine zweite Filterelementaufnahme auf, in welche der Filtermediumhalter zumindest bereichsweise entlang der Anordnungsrichtung A aufnehmbar ist. Besonders bevorzugt ist bzw. sind die erste und/oder zweite Filterelementaufnahme derart ausgebildet, daß das erste Filterkassettenteil und das zweite Filterkassettenteil in der Anordnungsposition durch den Filtermediumhalter voneinander beabstandet sind. Mit anderen Worten ist die Summe der Ausnehmungstiefen der ersten und zweiten Filterelementaufnahme, sofern vorhanden, kleiner als die Dicke des Filterelements bzw. des Filtermediumhalters entlang der Anordnungsrichtung A. Beispielsweise kann in der Anordnungsposition zwischen dem ersten und zweiten Filterkassettenteil ein Spalt von etwa 1 mm bis etwa 10 mm, bevorzugt von etwa 2 mm bis etwa 5 mm verbleiben.

Die Filterelementaufnahme umfaßt bevorzugt zumindest einen Dichtsteg. Bevorzugt ist der zumindest eine Kassettenzulaufkanal und/oder der zumindest eine Kassettenablaufkanal von einem zugeordneten Dichtsteg umgeben. Bevorzugt ist die Retentatkammer und/oder die Filtratkammer von einem Dichtsteg umgeben. Der Dichtsteg weist insbesondere eine Höhe von etwa 0,5 mm bis etwa 5 mm auf. In der Anordnungsposition ist der Dichtsteg vollständig von dem Filtermediumhalter bzw. dem Filterelement abgedeckt.

Bevorzugt ist das erste Filterkassettenteil identisch zu dem zweiten Filterkassettenteil. Insbesondere können das erste und zweite Filterkassettenteil jeweils punktsymmetrisch zu einem Mittelpunkt des Filterkassettenteils oder jeweils spiegelsymmetrisch zu einer Spiegelachse ausgebildet sein.

Auf der der ersten Filterelementanordnungsseite des ersten Filterkassettenteils gegenüberliegenden bzw. entgegengesetzten Seite des ersten Filterkassettenteils ist bevorzugt eine Filtermodulanschlußkonfiguration ausgebildet. Die Filtermodulanschlußkonfiguration ist ausgelegt, um ein weiteres Filtermodul fluiddicht mit dem Filtermodul zu verbinden, wobei das weitere Filtermodul eine komplementäre Filtermodulanschlußkonfiguration aufweist. Die Filtermodulanschlußkonfiguration kann bevorzugt jeweils Dichtstege um den zumindest einen Modulzulaufkanal und/oder den zumindest einen Modulablaufkanal umfassen. Die Dichtstege können einstückig mit dem ersten bzw. zweiten Filterkassettenteil ausgebildet sein. Alternativ können Dichtringe zum fluiddichten Verbinden vorgesehen sein. Die Dichtringe sind bevorzugt in einer komplementären Dichtringnut des entsprechenden Filterkassettenteils gehalten. Bevorzugt sind die Dichtringe aus einem Elastomer geformt.

Eine entsprechende Filtermodulanschlußkonfiguration zum Anschluß eines weiteren Filtermoduls kann vorzugsweise auch auf der Seite des zweiten Filterkassettenteils ausgebildet sein, welche der zweiten Filterelementanordnungsseite des zweiten Filterkassettenteils gegenüberliegt bzw. entgegengesetzt ist.

Vorzugsweise umfaßt das Filtermodul ein drittes Filterkassettenteil und ein zweites Filterelement. Das zweite Filterelement ist bevorzugt identisch zu dem ersten Filterelement. Das erste Filterelement wird in dieser Konfiguration an dem ersten Filterkassettenteil angeordnet bzw. aufgenommen und das zweite Filterelement wird an dem zweiten Filterkassettenteil angeordnet bzw. aufgenommen, während das dritte Filterkassettenteil zwischen dem ersten und zweiten Filterelement angeordnet wird. Bei einer weiteren bevorzugten Ausführungsform der Erfindung können zwischen dem ersten und dem zweiten Filterelement zwei oder mehrere der vorgenannten dritten Filterkassettenteile angeordnet sein, wobei jedem der dritten Filterkassettenteile ein zusätzliches Filterelement zugeordnet ist.

Bevorzugt weist das dritte Filterkassettenteil eine dritte Filterelementanordnungsseite auf, welche identisch zu der zweiten Filterelementanordnungsseite des zweiten Filterkassettenteils ist. Weiter bevorzugt weist das dritte Filterkassettenteil eine vierte Filterelementanordnungsseite auf, welche identisch zu der ersten Filterelementanordnungsseite des ersten Filterkassettenteils ist. Beispielsweise kann das dritte Filterkassettenteil durch ein Verbinden oder ein gemeinsames Ausbilden eines ersten und zweiten Filterkassettenteils ausgebildet sein.

Weiter bevorzugt ist das dritte Filterkassettenteil frei von durchgängigen Öffnungen und Kanälen, insbesondere in Richtung der Anordnungsrichtung A. Durch das dritte Filterkassettenteil können daher die ersten und zweiten Kassettenzulaufkanäle bzw. die ersten und zweiten Kassettenablaufkanäle sowie weitere optionale Kanäle der ersten und zweiten Filterkassettenteile fluidisch voneinander getrennt sein. Mit anderen Worten trennt das dritte Filterkassettenteil vorzugsweise das erste Filterkassettenteil und das erste Filterelement von dem zweiten Filterkassettenteil und dem zweiten Filterelement. Vorteilhafterweise kann ein einziges Filtermodul dazu verwendet werden zwei, insbesondere verschiedene, Filterprozesse gleichzeitig oder zeitlich versetzt durchzuführen.

Mittels des dritten Filterkassettenteils können zwei Filterelemente in einem einzigen Filtermodul untergebracht sein. Dabei kann das dritte Filterkassettenteil mit dem ersten und zweiten Filterkassettenteil in der Anordnungsposition mittels einer Verriegelungseinrichtung lösbar oder unlösbar miteinander verriegelt bzw. verrastet sein. Die Verriegelung zwischen dem ersten und zweiten Filterkassettenteil wird bevorzugt durch eine mittelbare Verriegelung über das dritte Filterkassettenteil ersetzt. Es versteht sich, daß das erste, zweite und dritte Filterkassettenteil auch gemeinsam mittels einer Verriegelungseinrichtung miteinander verriegelt werden können.

Vorzugsweise sind zwischen dem ersten und dem zweiten Filterelement zwei oder mehrere dritte Filterkassettenteile angeordnet, wobei jedem der dritten Filterkassettenteile ein zusätzliches Filterelement zugeordnet ist. Vorteilhafterweise können so drei oder mehr Filterelemente in einem Filtermodul zusammengefaßt sein. Die dritten Filterkassettenteile können miteinander lösbar oder unlösbar verriegelt sein. Bevorzugt kann eines der zwei oder mehr dritten Filterkassettenteile frei von durchgängigen Öffnungen und Kanälen, insbesondere in Richtung der Anordnungsrichtung A, sein.

Vorzugsweise weist das erste Filterkassettenteil einen ersten Kassettenentlüftungskanal auf, welcher fluidisch mit der Retentatkammer verbunden sein kann. Weiter vorzugsweise weist das zweite Filterkassettenteil einen zweiten Kassettenentlüftungskanal und das Filterelement bzw. der Filtermediumhalter einen Halterentlüftungskanal auf. In der Anordnungsposition des Filtermoduls kann mittels des ersten Kassettenentlüftungskanals, des Halterentlüftungskanals und des zweiten Kassettenentlüftungskanals ein Modulentlüftungskanal ausgebildet sein. Vorteilhafterweise kann mittels des Modulentlüftungskanals zu Beginn einer Filtration Luft aus den internen Volumina des Filtersystems abgeführt werden. Weiter vorteilhafterweise ist es dabei nicht notwendig, die Luft durch das Filtermedium strömen zu lassen, wodurch der notwendige Druck zur Entlüftung verringert werden würde. Der Modulentlüftungskanal kann beim betriebsgemäßen Gebrauch des Filtermoduls solange mit dem Äußeren bzw. der Umgebung bzw. der Atmosphäre verbunden sein, bis die Entlüftung vollendet ist und Fluid in den Modulentlüftungskanal eintritt. Danach kann die Verbindung getrennt bzw. verschlossen werden. Insbesondere kann die Verbindung mit dem Äußeren über einen Sterilfilter, der bevorzugt Mikroorganismen zurückhält, wie beispielsweise Bakterien, Pilze oder Viren, erfolgen.

Vorzugsweise weist das erste Filterkassettenteil einen ersten Kassettendrainagekanal auf. Weiter vorzugsweise weist das zweite Filterkassettenteil einen zweiten Kassettendrainagekanal auf, welcher mit der Filtratkammer fluidisch verbunden sein kann. Das Filterelement bzw. der Filtermediumhalter weist bevorzugt einen Halterdrainagekanal auf. In der Anordnungsposition des Filtermoduls kann mittels des ersten Kassettendrainagekanals, des Halterdrainagekanals und des zweiten Kassettendrainagekanals ein Moduldrainagekanal ausgebildet sein. Vorteilhafterweise kann mittels des Moduldrainagekanals am Ende einer Filtration Fluid aus den internen Volumina des Filtersystems abgelassen werden, beispielsweise aus den Filtratkammern. Der Moduldrainagekanal kann beim betriebsgemäßen Gebrauch des Filtermoduls verschlossen und erst nach dem Ende der Filtration mit dem Äußeren verbunden sein.

### Filtersystem

Die Erfindung betrifft ein modulares Filtersystem umfassend:
ein erstes Abschlußmodul,
ein zweites Abschlußmodul und
zumindest ein zwischen dem ersten und zweiten Abschlußmodul angeordnetes erfindungsgemäßes Filtermodul,
wobei der Modulzulaufkanal des zumindest einen Filtermoduls mit einem Fluidzulauf des ersten und/oder zweiten Abschlußmoduls fluidisch verbunden ist und
wobei der Modulablaufkanal des zumindest einen Filtermoduls mit einem Fluidablauf des ersten und/oder zweiten Abschlußmoduls fluidisch verbunden ist.

Vorteilhafterweise kann eine Mehrzahl von gleichartigen Filtermodulen und/oder eine Mehrzahl von verschiedenen Filtermodulen mit unterschiedlichen Filtermedien in einfacher Weise in einem Filtersystem kombiniert werden. Daher ist das Filtersystem in einfacher Weise beliebig skalierbar. Insgesamt können ein, zwei, drei, vier oder mehr Filtermodule zwischen den zwei Abschlußmodulen angeordnet und mit den Abschlußmodulen und untereinander fluidisch verbunden werden. Die einzelnen Modulzulaufkanäle der Filtermodule können dabei einen mit dem Fluidzulauf fluidisch verbundenen Zulaufkanal ausbilden. Entsprechend können die einzelnen Modulablaufkanäle einen mit dem Fluidablauf fluidisch verbundenen Ablaufkanal ausbilden. Weiter sind die Filtermedien bzw. die Filterhalter in den Filtermodulen des Filtersystems untereinander mittels aufgrund der Filterkassettenteile der Filtermodule stets voneinander beabstandet angeordnet. Dadurch wird vorteilhafterweise eine mechanische Beanspruchung zwischen den einzelnen Filtermedien bzw. Filterhalter vermieden.

Dabei kann das Filtersystem bevorzugt derart konfiguriert sein, daß das erste Abschlußmodul den Fluidzulauf und das zweite Abschlußmodul den Fluidablauf aufweist. Dadurch erfolgt eine Durchströmung des Filtersystems von dem ersten Abschlußmodul in Richtung des zweiten Abschlußmoduls.

Alternativ kann das Filtersystem derart konfiguriert sein, daß das erste Abschlußmodul den Fluidzulauf und den Fluidablauf aufweist, so daß die fluidische Verbindung des Fluidzulaufs und des Fluidablaufs ausschließlich an einem Ende des Filtersystems erfolgen kann. Das zweite Abschlußmodul dient dann lediglich dem einseitigen Verschließen des Zulaufkanals und des Ablaufkanals

Weiter alternativ können jeweils ein Fluidzulauf und ein Fluidablauf in dem ersten und zweiten Abschlußmodul vorgesehen sein. Insbesondere bei der Verwendung eines bevorzugten Filtermoduls mit drei Filterkassettenteilen, welches zwei fluidisch voneinander getrennte interne Volumina aufweist, kann so für jedes der internen Volumina ein zugeordneter Fluidzulauf und Fluidablauf vorgesehen sein. Folglich sind zwei Filtrationsprozesse unabhängig und fluidisch getrennt voneinander durchführbar.

Die fluidische Verbindung zwischen dem ersten Abschlußmodul und einem daran angeordneten Filtermodul kann über eine erste komplementäre Filtermodulanschlußkonfiguration des ersten Anschlußmoduls erfolgen. Entsprechend kann das zweite Abschlußmodul eine zweite komplementäre Filtermodulanschlußkonfiguration aufweisen, welche mit der Filtermodulanschlußkonfiguration eines Filtermoduls fluiddicht verbunden werden kann.

Bevorzugt kann bzw. können das erste Abschlußmodul bzw. das zweite Abschlußmodul mit einem daran angeordneten Filtermodul mittels einer Verriegelungseinrichtung lösbar oder unlösbar verriegelt bzw. verrastet werden. Dabei kann die Verriegelung oder Verrastung entsprechend der Verrastung der Filterkassettenteile untereinander erfolgen. Analog können auch die Filtermodule untereinander mittels einer Verriegelungseinrichtung lösbar oder unlösbar verriegelt bzw. verrastet werden.

Bevorzugt können die Abschlußmodule sowie das bzw. die dazwischen angeordneten Filtermodul(e) mit einer Andruckvorrichtung mit einer Andruckkraft K beaufschlagt werden, so daß die Filtermodulanschlußkonfigurationen und die zugeordneten komplementären Filtermodulanschlußkonfigurationen mit einem vorbestimmten Anpreßdruck beaufschlagt werden. Die Andruckkraft K wird mittels der Andruckvorrichtung bevorzugt an der Seite des ersten Anschlußmoduls angelegt, welche der ersten komplementären Filtermodulanschlußkonfiguration des ersten Anschlußmoduls gegenüberliegt und in Richtung des zweiten Abschlußmoduls wirkt. Entsprechend wird eine gleichgroße Andruckkraft K bevorzugt an der Seite des zweiten Anschlußmoduls angelegt, welche der zweiten komplementären Filtermodulanschlußkonfiguration des zweiten Anschlußmoduls gegenüberliegt, und in Richtung des ersten Abschlußmoduls wirkt. Weiter bevorzugt können die ersten und zweiten Filterkassettenteile der Filtermodule durch die Andruckkraft K zueinander verlagert werden. Dadurch werden die in den Filtermodulen angeordneten und aus einem rückstellfähigen bzw. elastischen Material ausgebildeten Filtermediumhalter vorgespannt, wodurch die Fluiddichtigkeit beim betriebsgemäßen Gebrauch des Filtersystems vorteilhafterweise erhöht wird.

Bevorzugt können mehrere Filtermodule des Filtersystems parallel betrieben werden. Mit anderen Worten können die Retentatseiten der Filtermedien mehrerer Filtermodule fluidisch über den Zulaufkanal mit dem Fluidzulauf verbunden sein. Entsprechend sind die Filtratseiten der Filtermedien fluidisch über den Ablaufkanal mit dem Fluidablauf verbunden.

Erfindungsgemäß ist ein erstes und ein zweites Filtermodul hintereinander in Serie verbunden. Mit anderen Worten ist die Retentatseite des Filtermediums des zweiten Filtermodul mit der Filtratseite des Filtermediums des ersten Filtermoduls fluidisch verbunden. Der Modulzulaufkanal des zweiten Filtermoduls ist mit dem Modulablaufkanal des ersten Filtermoduls miteinander fluidisch verbunden, wobei eine unmittelbare fluidische Verbindung der Modulzulaufkanäle der beiden Filtermodule untereinander und der Modulablaufkanäle der beiden Filtermodule untereinander vermieden werden muß. Das Filtersystem weist ein Trennmodul auf, welches den Modulzulaufkanal des ersten Filtermoduls in Richtung des zweiten Filtermoduls verschließt, den Modulablaufkanal des ersten Filtermoduls mit dem Modulzulaufkanal des zweiten Filtermoduls fluidisch verbindet und den Modulablaufkanal des zweiten Filtermoduls in Richtung des ersten Filtermoduls verschließt.

Vorteilhafterweise können somit verschiedene Filterverfahren mit einem Filtersystem hintereinander auf ein Fluid angewendet werden, wobei vorteilhafterweise eine verbesserte Skalierbarkeit erreicht wird. Beispielsweise kann das Fluid zunächst durch einen Gewebefilter von groben schwebenden Stoffen befreit werden, im zweiten Schritt durch einen engeren Gewebefilter von feinen Schwebstoffen befreit werden und anschließend einen Membranadsorptionsfilter passieren, wobei dieser nicht verblockt.

Das Filtersystem umfaßt ein erstes Filtermodul und eines zweites Filtermodul und eine Trenneinrichtung, welche den Modulzulaufkanal des ersten Filtermoduls verschließt, wobei der Modulzulaufkanal von dem Modulablaufkanal des zweiten Filtermoduls fluidisch getrennt wird.

### Figurenbeschreibung

Nachfolgend werden bevorzugte Ausführungsformen der vorliegenden Erfindung anhand der beigefügten Zeichnungen beispielhaft erläutert. Es zeigt:
- Figur 1a:: eine Draufsicht auf eine erste Filterelementanordnungsseite eines ersten Filterkassettenteils;
- Figur 1b:: eine Draufsicht auf eine Filtratseite eines Filterelements;
- Figur 1c:: eine Draufsicht auf eine zweite Filterelementanordnungsseite eines zweiten Filterkassettenteils;

- Figur 2:: eine perspektivische Explosionsansicht eines Filtersystems;
- Figur 3:: einen Schnitt durch ein Filtersystem;
- Figur 4:: einen Schnitt durch eine Ausführungsform des Filtersystems;
- Figur 5:: einen Schnitt durch eine weitere Ausführungsform des Filtersystems;
- Figur 6a:: eine Draufsicht auf eine weitere Ausführungsform eines ersten Filterkassettenteils;
- Figur 6b:: eine Draufsicht auf eine weiteren Ausführungsform eines Filterelements;
- Figur 6c:: eine Draufsicht auf eine weiteren Ausführungsform eines Abschlußmoduls;
- Figur 7:: eine perspektivische Explosionsansicht einer weiteren Ausführungsform eines Filtersystems;
- Figur 8a:: eine Schnittansicht durch eine Ausführungsform eines Filterelements;
- Figur 8b:: eine Schnittansicht durch eine weitere Ausführungsform eines Filterelements;
- Figur 8c:: eine Schnittansicht durch eine weitere Ausführungsform eines Filterelements, welches zwischen zwei Filterkassettenteilen angeordnet ist;
- Figur 8d:: eine Schnittansicht durch die in Figur 8b gezeigte Ausführungsform des Filterelements, welches zwischen zwei Filterkassettenteilen angeordnet ist;
- Figur 9:: eine perspektivische Explosionsansicht eines Filtersystems;
- Figur 10:: eine perspektivische Explosionsansicht eines Filtersystems.

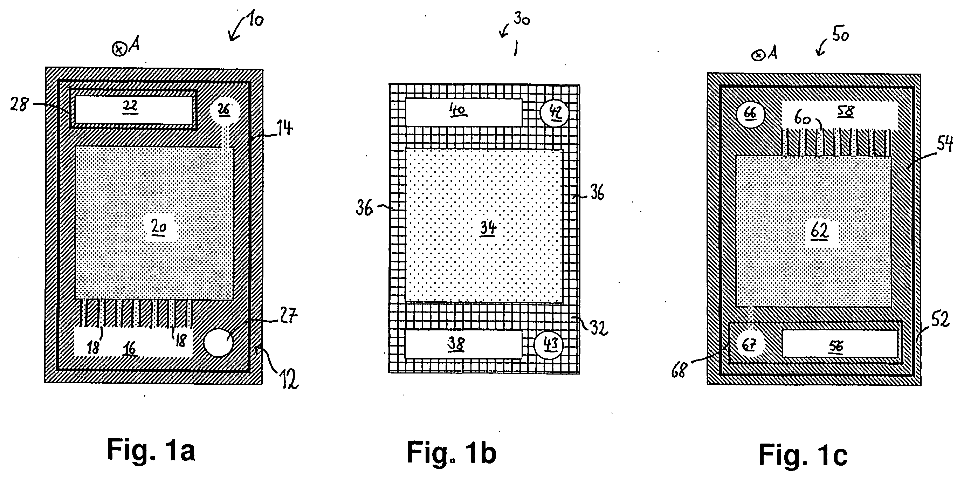

Die **Figur 1a** zeigt eine Draufsicht auf eine erste Filterelementanordnungsseite 12 eines ersten Filterkassettenteils 10 eines Filtermoduls. Die **Figur 1b** zeigt eine Draufsicht auf eine Filtratseite 32 (auch Permeatseite genannt) eines Filterelements 30. Die **Figur 1c** zeigt eine Draufsicht auf eine zweite Filterelementanordnungsseite 52 eines zweiten Filterkassettenteils 50.

Das in Figur 1a gezeigte erste Filterkassettenteil 10 weist eine erste Filterelementaufnahme 14 auf, in welche das in Figur 1b gezeigte Filterelement 30 zumindest bereichsweise entlang einer Anordnungsrichtung A aufnehmbar ist. Die Anordnungsrichtung A steht dabei im wesentlichen senkrecht auf der Filterelementanordnungsseite 12. Das in Figur 1b gezeigte Filterelement 30 wird zum Ausbilden des Filtermoduls derart in die erste Filterelementaufnahme 14 eingeführt, daß eine Retentatseite (nicht gezeigt) des Filterelements 30, welche der Filtratseite 32 gegenüberliegt, der ersten Filterelementanordnungsseite 12 zugewandt ist. Dann wird das Filterelement 30 derart entlang der Anordnungsrichtung A in eine in Figur 1c gezeigte zweite Filterelementaufnahme 54 eingeführt, so daß die Filtratseite 32 des Filterelements 30 der zweiten Filterelementanordnungsseite 52 zugewandt ist. Das erste Filterkassettenteil 10, das Filterelement 30 und das zweite Filterkassettenteil 50 werden miteinander in einer Anordnungsposition befestigt und bilden dann zusammen das Filtermodul aus. Das Befestigen kann durch ein Verrasten, Verriegeln, Verschrauben, Verschweißung oder ein Verkleben erfolgen.

Das erste Filterkassettenteil 10 weist einen ersten Kassettenzulaufkanal 16 auf, welcher fluidisch mittels mehrerer in dem ersten Filterkassettenteil 10 ausgebildeter Modulzulaufverbindungskanäle 18 mit einer Retentatkammer 20 verbunden ist. Es versteht sich, daß die fluidische Verbindung auch mit lediglich einem Modulzulaufverbindungskanal 18 erfolgen kann. Die Retentatkammer 20 ist ausgelegt, um das zu filtrierende Fluid an einer Retentatseite (nicht gezeigt) eines Filtermediums 34 des Filterelements 30 bereitzustellen. Die Tiefe der Retentatkammer 20 entlang der Anordnungsrichtung A kann in Abhängigkeit von dem erwarteten Volumen an anfallendem Retentat beliebig gewählt werden. Die Erstreckung des ersten Filterkassettenteils 10 entlang dieser Richtung ist dann entsprechend größer wählbar, um die Retentatkammer 20 zu beinhalten. Beispielsweise kann die Retentatkammer 20 eine Tiefe von etwa 5 mm, etwa 10 mm oder etwa 20 mm aufweisen. Soll das Filtermodul ausgelegt sein, ein Fluid mit einem größeren Volumen an Schwebstoffen zu filtern, kann die Tiefe der Retentatkammer 20 auch etwa 50 mm, etwa 100 mm, etwa 200 mm oder mehr betragen.

Dementsprechend kann das Volumen der Retentatkammer 20 etwa 10 ml, etwa 100 ml, etwa 1 I, etwa 5 I oder mehr als 5 I betragen.

Das erste Filterkassettenteil 10 weist weiter einen ersten Kassettenablaufkanal 22 auf, welcher keine fluidische Verbindung zu der Retentatkammer 20 aufweist.

Das Filterelement 30 umfaßt das Filtermedium 34, welches die Filtratseite 32 und die nicht gezeigte Renetatseite des Filterelements 30 voneinander trennt. Das Filtermedium 34 ist fluidisch durchlässig, wobei filtermedienspezifische Stoffe das Filtermedium 34 nicht passieren können. Da der Fluidfluß bestimmungsgemäß von der Retentatseite zur Filtratseite 32 gerichtet ist, verbleiben diese filtermedienspezifischen Stoffe auf der Retentatseite oder verbleiben im Filtermedium 34, gelangen jedoch im wesentlichen nicht auf die Filtratseite 32 des Filterelements 30 bzw. des Filtermediums 34. Zwischen der Retentatseite und der Filtratseite 32 herrscht eine Fluiddruckdifferenz in Abhängigkeit von dem angelegten Fluiddruck und der Durchlässigkeit des Filtermediums 34.

Das Filtermedium 34 ist durch einen Filtermediumhalter 36 gehalten bzw. an dem Filtermediumhalter 36 befestigt, wodurch das Filtermedium in seiner Position bzw. in seiner Form gehalten wird. In der in Figur 1b gezeigten Ausführungsform ist der Filtermediumhalter 36 zumindest bereichsweise, insbesondere vollständig, aus einem rückstellfähigen elastischen Material ausgebildet, wie beispielsweise einem Silikon, einem Gummi bzw. einem thermoplastischen Elastomer (TPE). Daher kann der Rand des Filtermediums 34 zur Befestigung mit dem Filtermediumhalter 36 verschweißt werden. Wird der Filtermediumhalter 36 durch Erstarren eines flüssigen Materials (beispielsweise durch Spritzgießen) ausgebildet, so kann das Filtermedium 34 mit dem Filtermediumhalter 36 zumindest bereichsweise vergossen sein, beispielsweise an einem Randbereich des Filtermediums 34.

In dem Filterelement 30 bzw. dem Filtermediumhalter 36 ist weiter ein Halterzulaufkanal 38 und ein Halterablaufkanal 40 ausgebildet. Der Halterzulaufkanal 38 bzw. der Halterablaufkanal 40 sind bevorzugt als durchgängige Öffnungen im Filterelement 30, insbesondere im Filtermediumhalter 36, ausgebildet.

Das zweite Filterkassettenteil 50 weist einen zweiten Kassettenzulaufkanal 56 auf, welcher bevorzugt formkongruent zu dem Halterzulaufkanal 38 und dem ersten Kassettenzulaufkanal 16 ausgebildet ist. In der Anordnungsposition sind der erste Kassettenzulaufkanal 16, der Halterzulaufkanal 38 und der zweite Kassettenzulaufkanal 56 in Richtung der Anordnungsrichtung A zur Deckung gebracht und fluidisch miteinander verbunden, so daß sie gemeinsam einen Modulzulaufkanal ausbilden.

Das zweite Filterkassettenteil 50 weist weiter einen zweiten Kassettenablaufkanal 58 auf, welcher bevorzugt formkongruent zu dem Halterablaufkanal 40 und dem ersten Kassettenablaufkanal 22 ausgebildet ist. In der Anordnungsposition sind der erste Kassettenablaufkanal 22, der Halterablaufkanal 40 und der zweite Kassettenablaufkanal 58 in Richtung der Anordnungsrichtung A zur Deckung gebracht und fluidisch miteinander verbunden, so daß sie gemeinsam einen Modulablaufkanal ausbilden. Der Modulablaufkanal bzw. der zweite Kassettenablaufkanal 58 ist fluidisch mittels mehrerer in dem zweiten Filterkassettenteil 50 ausgebildeten Modulablaufverbindungskanäle 60 mit einer Filtratkammer 62 verbunden. Es versteht sich, daß die fluidische Verbindung auch mit lediglich einem Modulablaufverbindungskanal 60 erfolgen kann. Die Filtratkammer 62 ist ausgelegt, um das gefilterte Fluid an der Filtratseite 32 des Filtermediums 34 des Filterelements 30 aufzunehmen. Um das Filtrat möglichst vollständig über den Modulablaufkanal abzuführen, ist das Volumen der Filtratkammer 62 vorzugsweise so gering wie möglich. Bevorzugt beträgt die Tiefe der Filtratkammer 62 entlang der Anordnungsrichtung A nicht mehr als etwa 10 mm, bevorzugt weniger als etwa 5 mm und insbesondere etwa 2 mm und weniger.

Das Filterelement 30 kann verschiedene Filtermedien 34 umfassen, wie beispielsweise einen Membranfilter, einen Tiefenfilter und/oder einen Adsorptionsmembranfilter. Bevorzugt kann das Filterelement 30 auch mehrere gleichartige oder verschiedene Filtermedien 34 umfassen. So kann das Filterelement 30 eine Mehrzahl von Membranfiltern in mehreren Lagen aufweisen. Ebenso können mehrere Lagen eines Tiefenfilters oder eines Adsorptionsmembranfilters als Filtermedium 34 zusammengefaßt sein. Besonders bevorzugt sind verschiedene Filter in einem Filterelement 30 zusammengefaßt. Beispielsweise können mehrere Lagen eines Membranfilters zwischen zumindest zwei Lagen eines Tiefenfilters, wie eines Vlieses, oder zwischen zwei Sieblagen angeordnet sein, um die Membranfilterlagen vor mechanischer Beanspruchung bzw. vor einem Zusetzen zu schützen. Das Filtermedium 34 kann beispielsweise Vliese, Filze, Spinnvliese, poröse Festkörper, Sintermetalle, Keramiken, Gewebe, Papier, Membranen und ähnliches allein oder in Kombination umfassen.

Filtermaterialien können bei mechanischer Beanspruchung Durchbruchstellen bekommen, durch welche das Fluid einschließlich der zu filtrierenden Substanz(en) hindurch fließt, so daß das Filtermodul unbrauchbar ist. Weiter kann das Filtermedium 34 durch Berührung mikrobiologisch oder chemisch kontaminiert werden, wodurch das Filtermodul ebenfalls unbrauchbar werden kann.

In der Anordnungsposition ist das Filterelement 30 mit dem Filtermedium 34 zwischen dem ersten Filterkassettenteil 10 und dem zweiten Filterkassettenteil 50 angeordnet und dadurch vor äußeren mechanischen und chemischen Einflüssen geschützt. Insbesondere verhindern die Filterkassettenteile 10, 50 eine händische Berührung des Filtermediums 34.

Das erste Filterkassettenteil 10 weist in der in Figur 1a gezeigten Ausführungsform weiter einen optionalen ersten Kassettenentlüftungskanal 26 auf, welcher fluidisch mit der Retentatkammer 20 verbunden ist. Bevorzugt erfolgt die fluidische Verbindung des ersten Kassettenentlüftungskanals 26 an der Seite der Retentatkammer 20, welche den Modulzulaufverbindungskanälen 18 gegenüberliegt. Das erste Filterkassettenteil 10 kann ferner einen ersten Kassettendrainagekanal 27 aufweisen, welcher nicht mit der Retentatkammer 20 fluidisch verbunden ist.

Der erste Kassettenentlüftungskanal 26 und der erste Kassettendrainagekanal 27 können, genau wie der erste Kassettenzulaufkanal 18 und der erste Kassettenablaufkanal 22, als durchgängige Öffnung in dem ersten Filterkassettenteil 10 ausgebildet sein, wobei die Öffnung bevorzugt eine Durchgangsrichtung aufweist, welche parallel zur Anordnungsrichtung A orientiert ist.

Entsprechend kann das zweite Filterkassettenteil 50, wie in der Figur 1c gezeigt, einen optionalen zweiten Kassettendrainagekanal 67 aufweisen, welcher fluidisch mit der Filtratkammer 62 verbunden ist. Bevorzugt erfolgt die fluidische Verbindung des zweiten Kassettendrainagekanals 67 an der Seite der Filtratkammer 62, welcher den Modulablaufverbindungskanälen 60 gegenüberliegt. Das zweite Filterkassettenteil 50 kann ferner einen zweiten Kassettenentlüftungskanal 66 aufweisen, welcher nicht mit der Filtratkammer 62 fluidisch verbunden ist.

Der zweite Kassettenentlüftungskanal 66 und der zweite Kassettendrainagekanal 67 können, genau wie der zweite Kassettenzulaufkanal 56 und der zweite Kassettenablaufkanal 58, jeweils als durchgängige Öffnung in dem zweiten Filterkassettenteil 50 ausgebildet sein, wobei die Öffnung bevorzugt eine Durchgangsrichtung aufweist, welche parallel zur Anordnungsrichtung A orientiert ist.

In dem Filterelement 30 bzw. dem Filtermediumhalter 36 ist entsprechend ein Halterentlüftungskanal 42 und ein Halterdrainagekanal 43 ausgebildet, welche bevorzugt als durchgängige Öffnungen im Filterelement 30, insbesondere im Filtermediumhalter 36, ausgebildet sind, wobei die Öffnungen bevorzugt eine Durchgangsrichtung aufweisen, welche parallel zur Anordnungsrichtung A orientiert ist.

Bevorzugt ist an der ersten Filterelementanordnungsseite 12 des ersten Filterkassettenteils 10, wie in Figur 1a gezeigt, zumindest ein Dichtsteg 28 ausgebildet, welcher den ersten Kassettenablaufkanal 22 umrandet bzw. umfängt. Der zumindest eine Dichtsteg 28 kann insbesondere auch den ersten Kassettenzulaufkanal 16, den ersten Kassettenentlüftungskanal 26 und/oder den ersten Kassettendrainagekanal 27 umranden bzw. umfangen. Insbesondere kann ein einziger Dichtsteg 28 einen, mehrere oder alle der vier genannten Kanäle gemeinsam umranden bzw. umfangen.

Der Dichtsteg 28 kann etwa 0,5 mm bis etwa 2 mm, bevorzugt etwa 1 mm, vorragen. Beim Anordnen des Filterelements 30 an das erste Filterkassettenteil 10 kontaktiert das Filterelement 30 zunächst den vorragenden Dichtsteg 28. In der Anordnungsposition, wenn ein Anpreßdruck zwischen dem Filterelement 30 und dem ersten Filterkassettenteil 10 anliegt, wird das aus einem rückstellfähigen Material ausgebildete Filterelement 30, insbesondere der Filtermediumhalter 36, durch den Dichtsteg 28 verformt bzw. eingedrückt. Durch den erhöhten Anpreßdruck zwischen dem Filterelement 30 und dem ersten Filterkassettenteil 10 im Bereich des Dichtstegs 28 wird eine verbesserte Dichtwirkung erzielt.

Analog ist an der zweiten Filterelementanordnungsseite 52 des zweiten Filterkassettenteils 50, wie in Figur 1c gezeigt, zumindest ein Dichtsteg 68 ausgebildet, welcher den zweiten Kassettenzulaufkanal 56 und den zweiten Kassettendrainagekanal 67 umrandet bzw. umfängt. Der zumindest eine Dichtsteg 68 kann insbesondere auch den zweiten Kassettenablauflcanal 58 und/oder den ersten Kassettenentlüftungskanal 66 umranden bzw. umfangen. Insbesondere kann ein einziger Dichtsteg 68 einen, mehrere oder alle der vier genannten Kanäle gemeinsam umranden bzw. umfangen.

Der Dichtsteg 68 kann ebenfalls etwa 0,5 mm bis etwa 2 mm, bevorzugt etwa 1 mm, entlang der Anordnungsrichtung A über die zweite Filterelementanordnungsseite 52 des zweiten Filterkassettenteils 50 vorragen. Beim Anordnen des Filterelements 30 an das zweite Filterkassettenteil 50 kontaktiert das Filterelement 30 dann zunächst den vorragenden Dichtsteg 68. In der Anordnungsposition, wenn ein Anpreßdruck zwischen dem Filterelement 30 und dem zweiten Filterkassettenteil 50 anliegt, wird das aus einem rückstellfähigen Material ausgebildete Filterelement 30, insbesondere der Filtermediumhalter 36, durch den Dichtsteg 68 verformt bzw. eingedrückt. Durch den erhöhten Anpreßdruck zwischen dem Filterelement 30 und dem zweiten Filterkassettenteil 50 im Bereich des Dichtstegs 68 wird eine verbesserte Dichtwirkung erzielt.

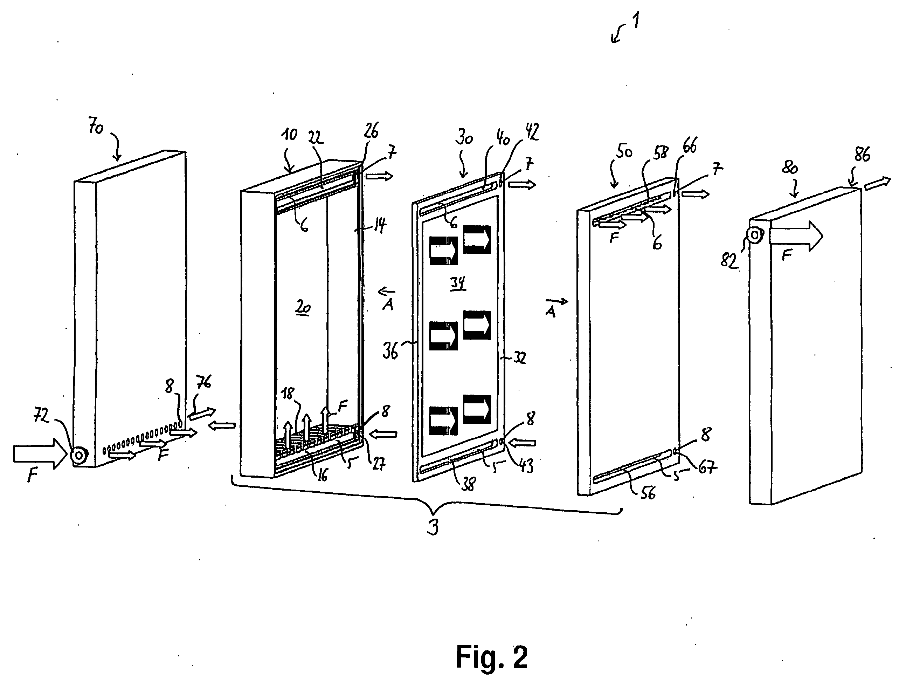

Die **Figur 2** zeigt eine perspektivische Explosionsansicht eines nicht erfindungsgemäßen Filtersystem 1 mit einem ersten Abschlußmodul 70 mit einem Fluidzulauf 72 und einem zweiten Abschlußmodul 80 mit einem Fluidablauf 82. Zwischen dem ersten Abschlußmodul 70 und dem zweiten Abschlußmodul 80 ist ein Filtermodul 3 angeordnet, welches ein erstes Filterkassettenteil 10, ein Filterelement 30 und ein zweites Filterkassettenteil 50 umfaßt. Die weiteren Elemente des Filtermoduls 3 entsprechen den mit Bezug auf die Figuren 1a bis 1c beschriebenen Elementen und sind daher mit identischen Bezugszeichen versehen. Ein Modulzulaufkanal 5, welcher durch den ersten Kassettenzulaufkanal 16, den Halterzulaufkanal 38 und den zweiten Kassettenzulaufkanal 56 ausgebildet ist, ist mit dem Fluidzulauf 72 des ersten Abschlußmoduls 70 fluidisch verbunden. Das zu filtrierende Fluid fließt bei betriebsgemäßem Gebrauch des Filtersystems 1 entlang der Fluidfließrichtung F. Nachdem Passieren des Filtermediums 34 kann das Fluid weiter entlang der Fluidfließrichtung F durch einen Modulablaufkanal 6 zu dem Fluidablauf 82 des zweiten Abschlußmoduls 80 fließen. Der Modulablaufkanal 6 wird durch den ersten Kassettenablaufkanal 22, den Halterablaufkanal 40 und den zweiten Kassettenablaufkanal 58 ausgebildet.

Mittels des ersten Kassettenentlüftungskanals 26, des Halterentlüftungskanals 42 und des zweiten Kassettenentlüftungskanals 66 wird in der Anordnungsposition des Filtermoduls 3 ein Modulentlüftungskanal 7 ausgebildet. Der Modulentlüftungskanal 7 kann zu Beginn einer Filtration dazu dienen, Luft abzulassen, welche in den internen Volumina des Filtersystems 1 vorhanden ist, insbesondere ohne daß diese Luft durch das Filtermedium 34 gedrückt wird. Insbesondere enthalten die Retentatkammem 20 des Filtersystems 1 zu Beginn der Filtration ein verhältnismäßig großes Luftvolumen im Vergleich zu dem Luftvolumen in den Kanälen. Der Modulentlüftungskanal 7 ist bevorzugt mit einer Entlüftungsöffnung 86 des zweiten Abschlußmoduls 80 fluidisch verbunden.

Entsprechend wird mittels des ersten Kassettendrainagekanals 27, des Halterdrainagekanals 43 und des zweiten Kassettendrainagekanals 67 in der Anordnungsposition des Filtermoduls 3 ein Moduldrainagekanal 8 ausgebildet. Der Moduldrainagekanal 8 kann am Ende der Filtration dazu dienen, verbleibendes Filtrat aus der oder den Filtratkammer(n) 62 des Filtersystems 1 zu entlassen. Der Moduldrainagekanal 8 ist bevorzugt mit einer Ablaßöffnung 76 des ersten Abschlußmoduls 70 fluidisch verbunden.

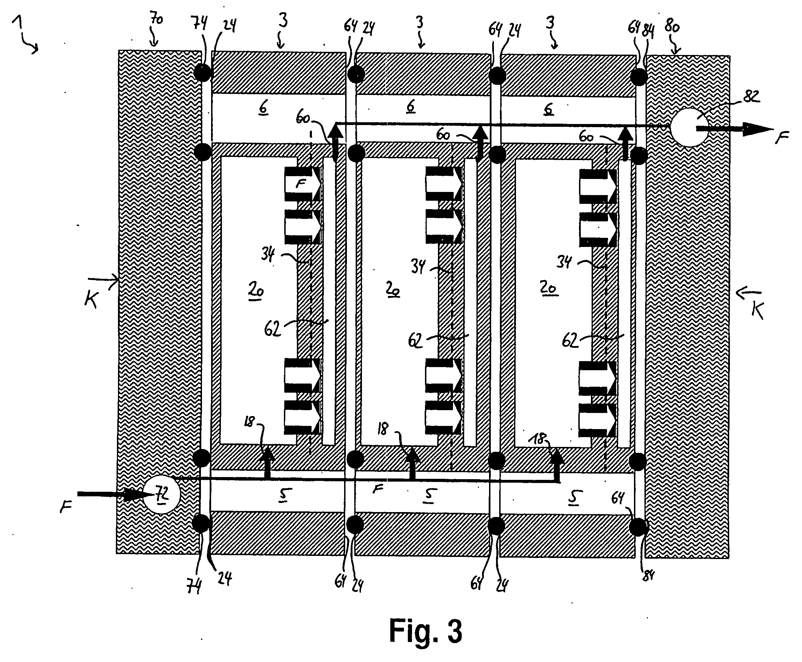

Die **Figur 3** zeigt einen Schnitt durch ein nicht erfindungsgemäßes Filtersystem 1 mit einem ersten Abschlußmodul 70, einem zweiten Abschlußmodul 80 und identischen Filtermodulen 3. Die weiteren Elemente der Filtermodule 3 entsprechen den mit Bezug auf die Figuren 1a bis 1c und 2 beschriebenen Elementen und sind daher mit identischen Bezugszeichen versehen.

Die Filtermodule 3 des Filtersystems 1 sind derart angeordnet, daß die Filtermodule 3 parallel betrieben werden. Mit anderen Worten sind die Retentatkammern 20 aller Filtermodule 3 fluidisch über den Zulaufkanal 5 mit dem Fluidzulauf 72 des ersten Abschlußmoduls 70 verbunden. Entsprechend sind die Filtratkammern 62 aller Filtermodule 3 fluidisch über den Ablaufkanal 6 mit dem Fluidablauf 82 des zweiten Abschlußmoduls 80 verbunden. Das Fluid strömt ausgehend von dem Fluidzulauf 72 entlang der Fluidfließrichtung F über die Filtermedien 34 zum Fluidablauf 82.

Vorteilhafterweise kann eine beliebige Zahl von gleichartigen Filtermodulen 3 in einfacher Weise in dem Filtersystem 1 bereitgestellt werden, um das Filtersystem im Hinblick auf die Menge des zu filtrierenden Fluid zu skalieren.

Die fluidische Verbindung zwischen dem ersten Abschlußmodul 70 und dem daran angeordneten Filtermodul 3 kann über eine erste komplementäre Filtermodulanschlußkonfiguration 74 des ersten Anschlußmoduls 70 erfolgen, welche mit einer Filtermodulanschlußkonfiguration 24 des Filtermoduls 3 fluiddicht kontaktiert bzw. verbunden ist. Beispielsweise kann die erste komplementäre Filtermodulanschlußkonfiguration 74 einen Dichtring 74 umfassen, welcher bevorzugt in einer entsprechenden Nut in dem ersten Anschlußmodul 70 gehalten ist. Bevorzugt umfaßt die Filtermodulanschlußkonfiguration 24 eine entsprechende Nut zur zumindest bereichsweisen Aufnahme des Dichtrings, so daß durch den Dichtring eine fluiddichte Verbindung zwischen dem ersten Anschlußmodul 70 und dem Filtermodul 3 ausgebildet ist. Es versteht sich, daß auch zwei oder mehr Dichtringe vorgesehen sein können.

Entsprechend können die weiteren Filtermodule 3 mittels entsprechender Filtermodulanschlußkonfigurationen 24 und komplementärer Filtermodulanschlußkonfigurationen 64 untereinander fluiddicht verbunden sein. Weiter kann das zum zweiten Abschlußmodul 80 benachbarte Filtermodul 3 mittels einer komplementären Filtermodulanschlußkonfigurationen 64 und einer zweiten Filtermodulanschlußkonfigurationen 84 des zweiten Abschlußmoduls 80 mit diesem fluiddicht verbunden sein.

In der gezeigten Form werden die Abschlußmodule 70, 80 sowie die dazwischen angeordneten Filtermodule 3 mit einer Andruckvorrichtung (nicht gezeigt) mit einer Andruckkraft K beaufschlagt, wodurch die Filtermodulanschlußkonfigurationen 24, 84 und die zugeordneten komplementären Filtermodulanschlußkonfigurationen 64, 74 mit einem vorbestimmten Anpreßdruck beaufschlagt werden. Dadurch werden die zwischen den Modulen angeordneten Dichtringe elastisch verformt, wodurch die Fluiddichtigkeit beim betriebsgemäßen Gebrauch des Filtersystems 1 vorteilhafterweise erhöht wird.

Weiter bevorzugt werden die ersten und zweiten Filterkassettenteile 10, 50 jedes der Filtermodule 3 durch die Andruckkraft K zueinander verlagert, da das zugehörige elastische Filterelement 30 bzw. der elastische Filtermediumhalter 36 gestaucht wird bzw. werden. Dadurch werden bevorzugt die Dichtstege 28, 68 in das elastische Material des Filtermediumhalters 36 gepreßt, wodurch die Fluiddichtigkeit des Filtermoduls 3 erhöht wird.

Während des betriebsgemäßen Gebrauchs ist es vorteilhaft, den Zulaufkanal 5 unterhalb des Ablaufkanals 6 anzuordnen, so daß das Fluid beim Strömen entlang der Fluidfließrichtung F sich innerhalb der internen Volumina des Filtersystems 1, wie beispielsweise der Retentatkammem 20 und der Filtratkammer 62, entgegen der Schwerkraft bewegt, wodurch Gasblasen aus diesen internen Volumina entfernt und in Richtung Fluidablauf 82 gefördert werden.

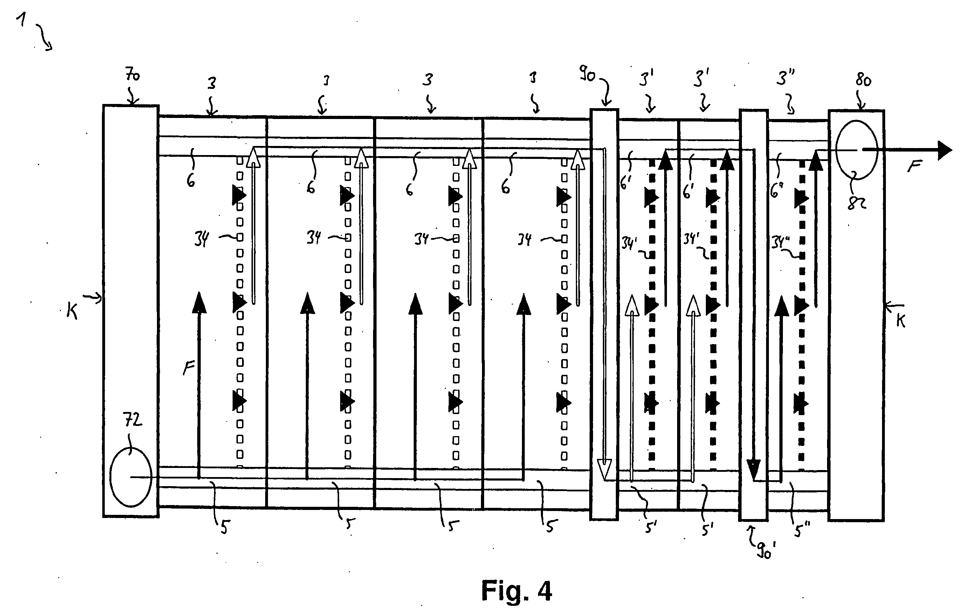

Die **Figur 4** zeigt einen Schnitt durch ein erfindungsgemäßes Filtersystem 1 mit einem ersten Abschlußmodul 70, einem zweiten Abschlußmodul 80 und vier identischen Filtermodulen 3, weiteren, davon verschiedenen, zwei untereinander identischen Filtermodulen 3' und einem weiteren, davon verschiedenen Filtermodul 3". Die weiteren Elemente der Filtermodule 3 entsprechen den mit Bezug auf die Figuren 1a bis 1c, 2 und 3 beschriebenen Elementen und sind daher mit identischen Bezugszeichen versehen. Die Elemente der Filtermodule 3' und 3" entsprechen den Elementen der Filtermodule 3 und sind, soweit sie mit diesen identisch sind, mit gestrichenen oder doppelt gestrichenen Bezugszeichen versehen.

Die vier Filtermodule 3 des Filtersystems 1 sind derart angeordnet, daß die Filtermodule 3 parallel betrieben werden, wie dies mit Bezug auf Figur 3 beschrieben ist. Zwei weitere Filtermodule 3' sind mit den vier Filtermodulen 3 in Serie verbunden. Dazu ist der Modulzulaufkanal 5' der zwei Filtermodule 3' mit dem Modulablaufkanal 6 der Filtermodule 3 mittels eines ersten Trennmoduls 90 fluidisch verbunden. Das erste Trennmodul 90 verschließt weiter den Modulzulaufkanal 5, welcher durch die vier Filtermodule 3 ausgebildet wird, so daß der Modulzulaufkanal 5 von dem Modulzulaufkanal 5', welcher durch die zwei Filtermodule 3' ausgebildet wird, fluidisch getrennt ist.

Ein weiteres Filtermodul 3" ist mit den zwei Filtermodulen 3' in Serie verbunden, in dem der Modulzulaufkanal 5" des Filtermoduls 3" mit dem Modulablaufkanal 6' der Filtermodule 3' mittels eines zweiten Trennmoduls 90' fluidisch verbunden ist. Entsprechend verschließt das zweite Trennmodul 90' den Modulzulaufkanal 5', so daß der Modulzulaufkanal 5' von dem Modulzulaufkanal 5", welcher durch das Filtermodul 3" ausgebildet wird, fluidisch getrennt ist.

Vorteilhafterweise können somit verschiedene Filterverfahren mit einem Filtersystem hintereinander auf ein Fluid angewendet werden. Beispielsweise kann das Fluid in den Filtermodulen 3 zunächst durch Schwebstofffilter 34 von Schwebstoffen befreit werden. Die Retentatkammem der Filtermodule 3 sind daher bevorzugt mit einem größeren Volumen ausgebildet als die Retentatkammem der anschließenden Filtermodule 3' und 3". Anschließend können Membranadsorptionsfilter 34' vorgesehen sein, um eine in dem Fluid gelöste Substanz zu adsorbieren und schließlich kann ein Sterilfilter 34" in Filtermodul 3" verhindern, daß Mikroorganismen wie Bakterien, Pilze, Viren oder ähnliches zum Fluidablauf 82 und von dort in die Umwelt gelangen.

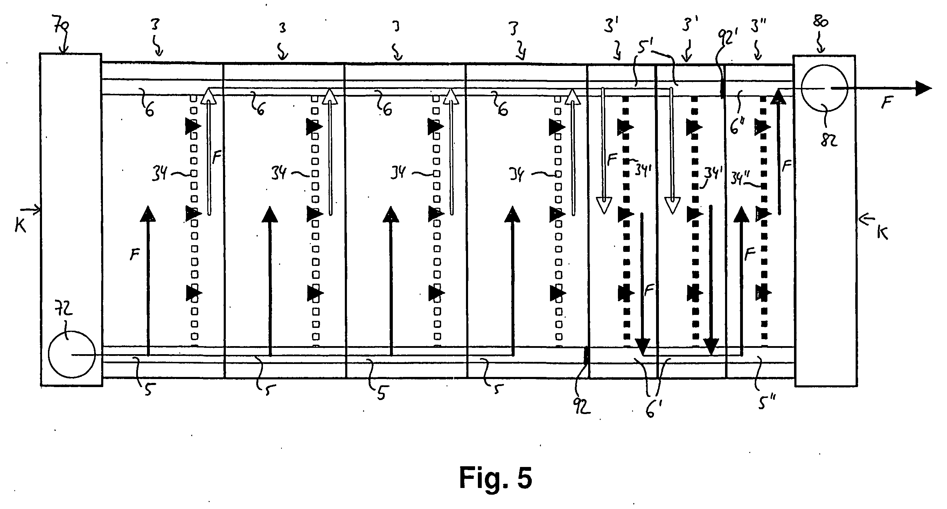

Die **Figur 5** zeigt einen Schnitt durch eine weitere Ausführungsform eines erfindungsgemäßen Filtersystems 1 mit einem ersten Abschlußmodul 70, einem zweiten Abschlußmodul 80 und vier identischen Filtermodulen 3, weiteren, davon verschiedenen zwei (untereinander identischen) Filtermodulen 3' und einem weiteren, davon verschiedenen Filtermodul 3". Diese Anordnung entspricht im wesentlichen der in Figur 4 gezeigten Ausführungsform, wobei identische Elemente mit gleichen Bezugszeichen versehen sind.

Wie die in Figur 4 gezeigte Ausführungsform werden die vier Filtermodule 3 parallel betrieben, wobei dann die zwei weiteren Filtermodule 3' damit in Serie verbunden sind. Abschließend folgt ein in Serie verbundenes Filtermodul 3". Im Unterschied zu der in Figur 4 gezeigten Ausführungsform weist das Filtersystem der Figur 5 keine Trennmodule auf, welche ausgelegt sind, den Modulzulaufkanal nachfolgender Filtermodule mit dem Modulablaufkanal der vorangehenden Filtermodule fluidisch zu verbinden.

Im Gegensatz dazu weist das in der Figur 5 gezeigte Filtersystem 1 eine erste Trenneinrichtung 92 auf, welche den Modulzulaufkanal 5, welcher durch die vier Filtermodule 3 ausgebildet wird, verschließt, um den Modulzulaufkanal 5 von dem daran angrenzenden Modulablaufkanal 6' zu trennen, welcher durch die zwei Filtermodule 3' ausgebildet wird. Weiter weist das Filtersystem 1 eine zweite Trenneinrichtung 92' auf, welche den Modulzulaufkanal 5', welcher durch die zwei Filtermodule 3' ausgebildet wird, verschließt, um den Modulzulaufkanal 5' von dem daran angrenzenden Modulablaufkanal 6" zu trennen, welcher durch das Filtermodul 3" ausgebildet wird.

Vorteilhafterweise können die Trenneinrichtungen 92, 92' besonders einfach ausgebildet sein, da durch die Trenneinrichtungen lediglich eine fluidische Trennung erfolgt. Insbesondere können die erste und zweite Trenneinrichtung 92, 92' jeweils als fluidundurchlässige Folie ausgebildet sein. Die Folie der ersten Trenneinrichtung 92 kann, insbesondere vollflächig, zwischen den Filtermodulen 3 und 3' angeordnet sein, so daß der Modulablauf 5 und der Modulzulauf 6' durch die Folie getrennt werden, während die Trenneinrichtung 92 im Bereich des Modulablaufkanals 6 und des angrenzenden Modulzulaufkanals 5' eine durchgängige Öffnung aufweist, durch welche ein Fluid von dem Modulablaufkanal 6 zum Modulzulauf 5' strömen kann. Die Trenneinrichtungen 92, 92' können alternativ als Verschlüsse ausgebildet sein, welche vor dem Anordnen der Filtermodule 3, 3', 3" zum Ausbilden des Filtersystems 1 in die entsprechenden Kanäle eingeführt werden, um diese zu schließen.

Wie in Figur 5 gezeigt, ist der Modulzulaufkanal 5' der Filtermodule 3' oberhalb des Modulablaufkanals 6' angeordnet, so daß das zu filternde Fluid beim betriebsgemäßen Gebrauch des Filtersystems 1 in den Filtermodulen 3' im wesentlichen entlang der Schwerkraftrichtung von oben nach unten strömt. Im nachfolgenden Filtermodul 3", welches den Filtermodulen 3' in Serie folgt, strömt das Fluid wieder entgegen der Schwerkraftrichtung von unten nach oben in Richtung des Fluidablaufs 82.

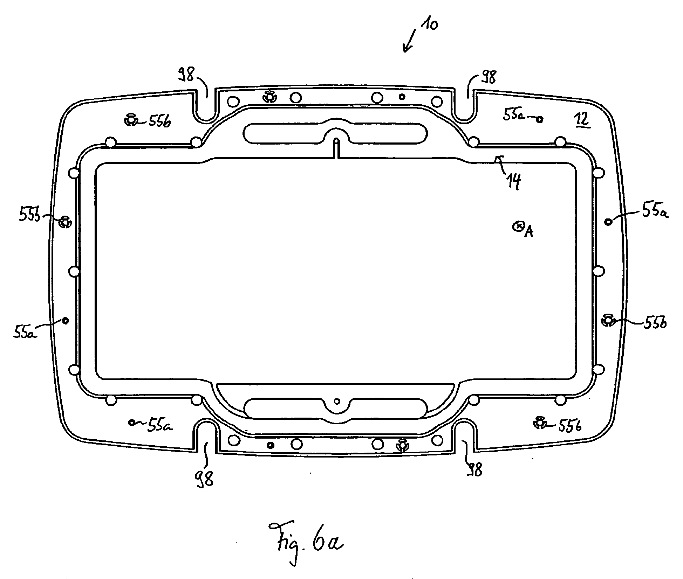

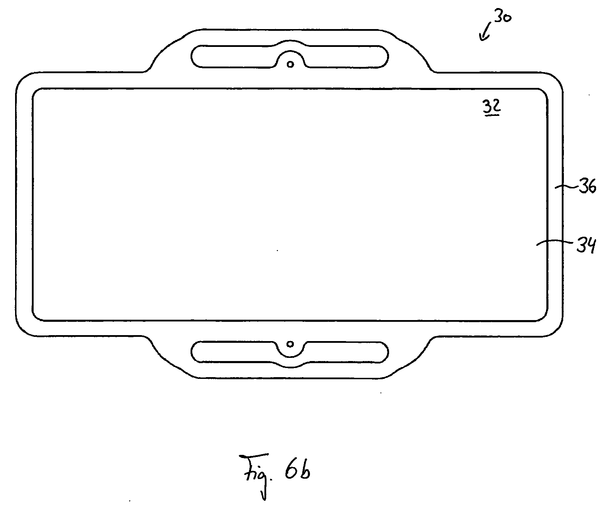

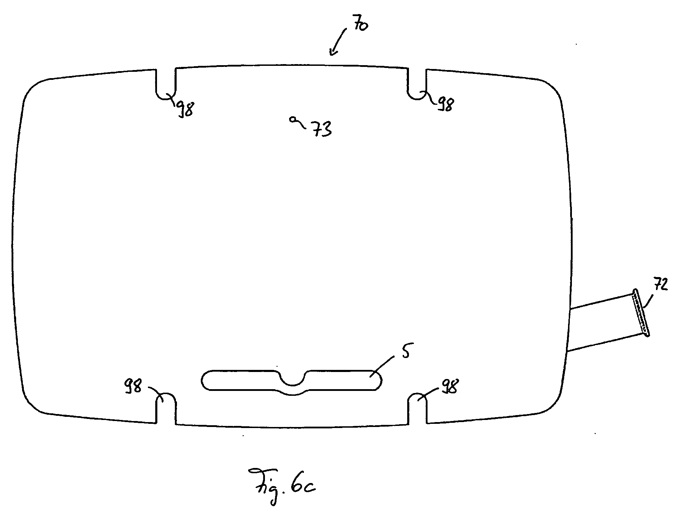

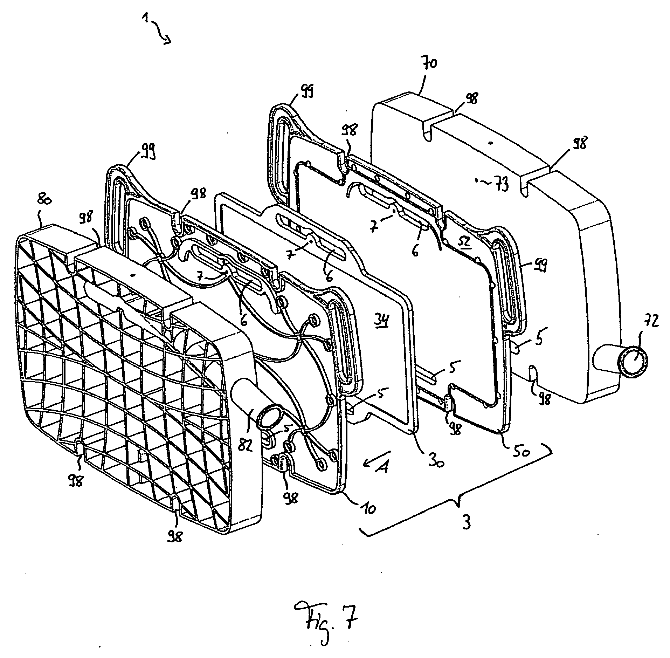

Die **Figur 6a** zeigt eine Draufsicht auf eine erste Filterelementanordnungsseite 12 einer weiteren Ausführungsform eines ersten Filterkassettenteils 10 eines Filtermoduls. Die **Figur 6b** zeigt eine Draufsicht auf eine Filtratseite 32 (auch Permeatseite genannt) einer weiteren Ausführungsform eines Filterelements 30. Die **Figur 6c** zeigt eine Draufsicht auf eine weitere Ausführungsform eines ersten Abschlußmoduls 70. Die **Figur 7** zeigt eine perspektivische Explosionsansicht einer Ausführungsform eines Filtersystems 1 mit einem ersten Abschlußmodul 70 mit einem Fluidzulauf 72 und einem zweiten Abschlußmodul 80, welches zu dem ersten Abschlußmodul 70 identisch ausgebildet ist, mit einem Fluidablauf 82. Zwischen dem ersten Abschlußmodul 70 und dem zweiten Abschlußmodul 80 ist ein Filtermodul 3 angeordnet, welches ein erstes Filterkassettenteil 10, ein Filterelement 30 und ein zweites Filterkassettenteil 50, welches zu dem ersten Filterkassettenteil 10 identisch ausgebildet ist, umfaßt. Das Filtersystem 1 entspricht in seiner Funktion im wesentlichen der in den Figuren 1a bis 1c und 2 gezeigten Ausführungsform, so daß entsprechende Elemente mit identischen Bezugszeichen versehen sind und zur Beschreibung der Funktion des Filtersystem 1 und dessen Bestandteile auf die Beschreibung der Figuren 1a bis 1c und 2 verwiesen wird.

Das in Figur 6a gezeigte erste Filterkassettenteil 10 weist eine erste Filterelementaufnahme 14 auf, in welche das in Figur 6b gezeigte Filterelement 30 zumindest bereichsweise entlang einer Anordnungsrichtung A aufnehmbar ist. Die Anordnungsrichtung A steht dabei im wesentlichen senkrecht auf der Filterelementanordnungsseite 12. Das in Figur 6b gezeigte Filterelement 30 wird zum Ausbilden des Filtermoduls derart in die erste Filterelementaufnahme 14 eingeführt, daß eine Retentatseite (nicht gezeigt) des Filterelements 30, welche der Filtratseite 32 gegenüberliegt, der ersten Filterelementanordnungsseite 12 zugewandt ist. Dann wird das Filterelement 30 derart entlang der Anordnungsrichtung A in eine zu der in Figur 6a gezeigten identischen zweite Filterelementaufnahme 54 (in Figur 7 gezeigt) eingeführt, so daß die Filtratseite 32 des Filterelements 30 der zweiten Filterelementanordnungsseite 52 zugewandt ist. Das erste Filterkassettenteil 10, das Filterelement 30 und das zweite Filterkassettenteil 50 werden miteinander in einer Anordnungsposition befestigt und bilden dann zusammen das Filtermodul 3 (in Figur 7 gezeigt) aus.

Das Befestigen des ersten Filterkassettenteils 10, des Filterelements 30 und des zweiten Filterkassettenteils 50 miteinander kann durch ein Verrasten, Verriegeln, Verschrauben, Verschweißen oder ein Verkleben erfolgen. Dazu kann beispielsweise zumindest ein Rastelement 55a an dem ersten Filterkassettenteil 10 vorgesehen sein, welches ausgelegt ist, mit komplementären Rastelementen 55b des zweiten Filterkassettenteils 50 lösbar oder unlösbar zu verrasten. Da die ersten und zweiten Filterkassettenteile 10, 50 zueinander identisch sein können, kann das erste Filterkassettenteil 10 zusätzlich zumindest ein komplementäres Rastelement 55b aufweisen, welches ausgelegt ist, mit Rastelementen 55a des zweiten Filterkassettenteils 50 lösbar oder unlösbar zu verrasten. Insbesondere weist das erste Filterkassettenteil 10 eine gleiche Anzahl von Rastelementen 55a und komplementären Rastelementen 55b auf.

Der Rand des Filtermediums 34 kann zur Befestigung an dem Filtermediumhalter 36 mit diesem verklebt und/oder an diesem festgeklemmt werden. Beispielsweise kann der Filtermediumhalter 36 zweiteilig ausgebildet sein, wobei der erste Teil des Filtermediumhalters 36 eine Filtermediumaufnahme aufweist, welche auslegt ist, das Filtermedium 34 entlang einer Einführrichtung E aufzunehmen, während der zweite Teil des Filtermediumhalters 36 mit einem Klemmbereich, der im wesentlichen komplementär zur Filtermediumaufnahme ausgebildet ist, durch ein zumindest bereichsweises Einführen in die Filtermediumaufnahme das Filtermedium 34 in der Filtermediumaufnahme festklemmt. Zusätzlich kann das Filtermedium mittels eines Klebemittels in der Filtermediumaufnahme festgeklebt sein.

Alternativ kann das Filtermedium 34 mittels eines Klebemittels, beispielsweise eines Polymers bzw. eines Silikonklebers, an dem Filtermediumhalter 36 befestigt sein. Dazu kann der Filtermediumhalter 36 eine Nut aufweisen, in welche das Filtermedium 34 eingesetzt und festgeklebt werden kann. Bevorzugt ist der Filtermediumhalter einstückig ausgebildet. Da der Filtermediumhalter 36 bevorzugt aus einem rückstellfähigen Material ausgebildet ist, wie beispielsweise einem Elastomer, kann der Filtermediumhalter 36 zum Einsetzen des Filtermediums 34 zumindest bereichsweise verformt werden, beispielsweise gedehnt oder gebogen, so daß die das Filtermedium 34 in die Nut einführen läßt.

Der Aufbau, die Funktion und das Zusammensetzen des Filtermoduls 3 aus dem Filterelement 30, dem ersten Filterkassettenteil 10 und dem zweiten Filterkassettenteil 50 sowie das damit bestückte in Figur 7 gezeigte Filtersystem 1, ist mit Bezug auf die Figuren 1a bis 1 c und 2 beschrieben.

Die Figur 6c zeigt eine bevorzugte Ausführungsform eines ersten Abschlußmoduls 70. Das erste Abschlußmodul umfaßt einen Fluidzulauf 72, der mit dem Modulzulaufkanal 5 fluidisch verbunden ist. Des Weiteren weist das erste Abschlußmodul 70 eine Entlüftungsöffnung 73 auf, welche mit dem Modulentlüftungskanal 7 fluidisch verbindbar ist.

Um das in der Figur 7 gezeigte Filtersystem auszubilden, sind zwei der in der Figur 6c gezeigten Abschlußmodule notwendig. Dabei wird das zweite Abschlußmodul 80 relativ zu ersten Abschlußmodul 70 um 180 Grad gedreht. Die in der Figur 6c gezeigten Elemente Fluidzulauf 72, Modulzulaufkanal 5 und Entlüftungsöffnung 73 werden dann entsprechend zu Fluidablauf 82, Modulablaufkanal 6 und Drainageöffnung 83, welche mit dem Moduldrainagekanal 8 fluidisch verbindbar ist.

Das in der Figuren 6a bis 6c und 7 gezeigte Filtersystem 1 kann auf einem Filtersystemhalter (nicht gezeigt) montiert werden, welcher beispielsweise zwei parallel zueinander und voneinander beabstandete Träger, Rohre bzw. Stangen aufweist, welche durch die Halteraufnahmen 98 des Filtersystems 1 zumindest bereichsweise aufgenommen werden können. Dadurch kann ein Verschieben der einzelnen Elemente des Filtersystems 1 in einer Richtung verschieden von, insbesondere senkrecht zu, der Anordnungsrichtung A verhindert werden. Insbesondere können mit einem Gewinde versehene Stangen in die Halteraufnahmen 98 eingeführt werden, wobei auf jeder Gewindestange beidseitig mit einem komplementären Gewinde versehene Sicherungselemente derart geschraubt werden können, daß die Sicherungselemente jeweils eine Andruckkraft auf ein Abschlußmodul 70, 80 anlegen und diese zusammen mit denen dazwischen befindlichen Filtermodulen 3 zusammenpressen.

Zur besseren Handhabung des Filtersystem 1, kann das Filtermodul 3 zumindest einen Griff 99 aufweisen, mit welchem das Filtersystem manuell oder automatisch ergriffen und transportiert werden kann.

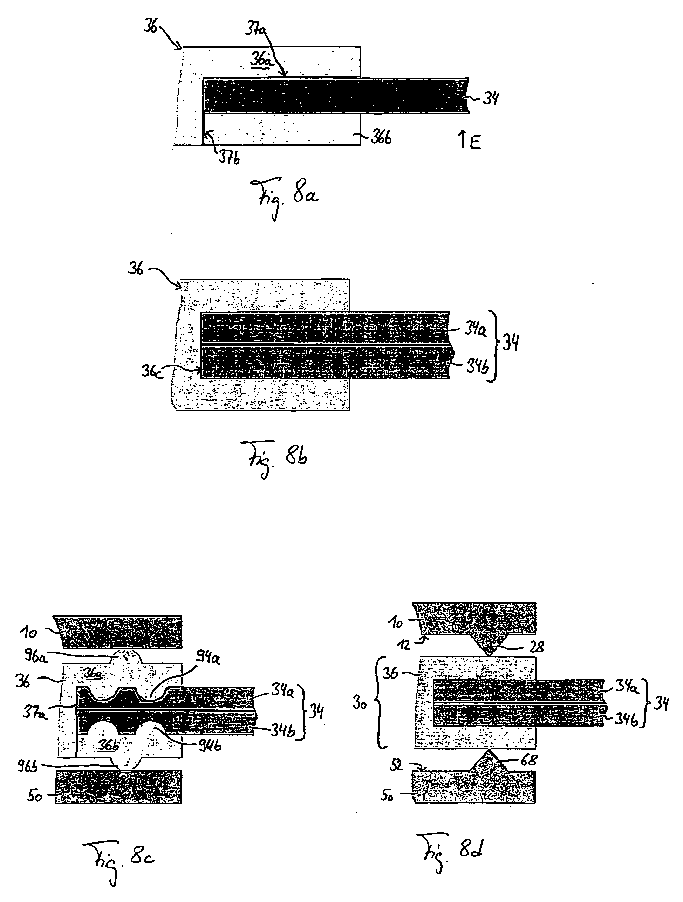

Die Figuren **8a bis 8d** zeigen Schnitte durch verschiedene bevorzugte Ausführungsformen eines Filtermediumhalters 36 mit einem damit befestigten Filtermedium 34.

Die **Figur 8a** zeigt einen Schnitt durch einen Filtermediumhalter 36 mit einem darin angeordneten Filtermedium 34, welches durch Festklemmen eines Bereiches des Filtermediums mit dem Filtermediumhaltebereich an dem Filtermediumhalter befestigt ist.

Wie in der Figur 8a gezeigt, kann der Filtermediumhalter 36 zweiteilig ausgebildet sein, wobei der erste Teil 36a des Filtermediumhalters 36 eine Filtermediumaufnahme 37a aufweist, welche auslegt ist, das Filtermedium 34 entlang einer Einführrichtung E aufzunehmen. Weiter kann der zweite Teil 36b des Filtermediumhalters 36 einen Klemmbereich 37b aufweisen, der im wesentlichen komplementär zur Filtermediumaufnahme 37a ausgebildet ist und zumindest bereichsweise in die Filtermediumaufnahme 37a entlang der Einführrichtung E einführbar sein, um das Filtermedium 34 in der Filtermediumaufnahme 37a festzuklemmen. Weiter bevorzugt ist das Filtermedium 34 zusätzlich mittels eines Klebemittels, beispielsweise mit einem Polymer oder einem Silikonkleber, in der Filtermediumaufnahme 37a festgeklebt. Besonders bevorzugt ist der zweite Teil 36b des Filtermediumhalters 36 mittels eines Klebemittels in der Filtermediumaufnahme 37a festgeklebt.

Wie in **Figur 8b** gezeigt, kann das Filtermedium 34 aus zwei, drei oder mehr Lagen 34a, 34b ausgebildet sein bzw. können zwei, drei oder mehrere Filtermedien 34 in dem Filtermediumhalter 36 aufgenommen bzw. daran befestigt sein. Dabei kann das Filtermedium 34 durch eine Vielzahl von identischen Lagen 34a, 34b oder durch verschiedene Lagen 34a, 34b ausgebildet sein.

Weiter kann das Filtermedium 34 mittels eines Klebemittels, beispielsweise einem Polymer bzw. einem Silikonkleber, an dem Filtermediumhalter 36 befestigt sein. Dazu kann der Filtermediumhalter 36 eine Nut 36c aufweisen, in welche das Filtermedium 34 eingesetzt und festgeklebt werden kann. Bevorzugt ist der Filtermediumhalter 36 einstückig ausgebildet. Es versteht sich, daß ein aus mehreren Lagen ausgebildetes Filtermedium 34 ebenfalls durch den in der Figur 8a gezeigten Filtermediumhalter 36 gehalten sein kann bzw. das ein aus einer einzigen Lage ausgebildetes Filtermedium 34 auch durch die in den Figuren 8b bis 8d gezeigten Filtermediumhalter 36 gehalten sein kann.

Wie in der **Figur 8c** gezeigt kann die Filtermediumaufnahme 37a zumindest eine Dichtkontur 94a, beispielsweise eine Dichtlippe 94a, aufweisen. Weiter kann der Klemmbereich 37b ebenfalls zumindest eine Dichtkontur 94b, beispielsweise eine Dichtlippe 94b, aufweisen. Die Dichtkonturen 94a, 94b können insbesondere derart ausgebildet sein, daß die Dichtkonturen 94a, 94b eine Öffnung in dem Filtermediumhalter 36 umlaufen, welche durch das Filtermedium 34 verschlossen ist. Mit anderen Worten können die Dichtkonturen 94a, 94b den Randbereich des Filtermediums 34, insbesondere vollständig, abdichten. Das Filtermedium 34 kann zwischen der Dichtkontur 94a der Filtermediumaufnahme 37a und der Dichtkontur 94b des Klemmbereichs 37b angeordnet sein bzw. eingeklemmt sein, wodurch vorteilhafterweise die Filtratseite und die Retentatseite des Filtermediums 34 fluiddicht getrennt werden kann. Es versteht sich, daß auch zwei, drei, vier oder mehr Dichtkonturen 94a, 94b parallel zueinander angeordnet sein können. Weiter können Dichtkonturen 94a, 94b bevorzugt auch in der in der Figur 8b gezeigten Ausführungsform des Filtermediumhalters 36 vorgesehen sein, wobei die Dichtkonturen 94a, 94b dann zweckmäßigerweise in der Nut 36c angeordnet sind.

Bevorzugt kann der Filtermediumhalter 36 zumindest einen ersten Dichtungsbereich 96a aufweisen, welcher ausgelegt ist, in der Anordnungsposition mit dem ersten Filterkassettenteil 10 zu kontaktieren. Weiter bevorzugt ist der erste Dichtungsbereich 96a rückstellfähig bzw. elastisch ausgebildet. Insbesondere kann der erste Dichtungsbereich 96a einstückig mit dem Filtermediumhalter 36 ausgebildet sein.

Entsprechend kann der Filtermediumhalter 36 zumindest einen zweiten Dichtungsbereich 96b aufweisen, welcher ausgelegt ist, in der Anordnungsposition mit dem zweiten Filterkassettenteil 50 zu kontaktieren. Weiter bevorzugt ist der zweite Dichtungsbereich 96b rückstellfähig bzw. elastisch, insbesondere einstückig mit dem Filtermediumhalter 36, ausgebildet.

Wie in der **Figur 8d** gezeigt kann an der ersten Filterelementanordnungsseite 12 des ersten Filterkassettenteils 10 zumindest ein Dichtsteg 28 ausgebildet sein. Der zumindest eine Dichtsteg 28 kann vorzugsweise etwa 0,5 mm bis etwa 2 mm, bevorzugt etwa 1 mm, entlang der Anordnungsrichtung A über die Filterelementanordnungsseite 12 vorragen. Beim Anordnen des Filterelements 30 bzw. des Filtermediumhalters 36 an das erste Filterkassettenteil 10 kontaktiert das Filterelement 30 bzw. der Filtermediumhalter 36 zunächst den vorragenden Dichtsteg 28. In der Anordnungsposition, wenn ein Anpreßdruck zwischen dem Filterelement 30 und dem ersten Filterkassettenteil 10 anliegt, wird das aus einem rückstellfähigen Material ausgebildete Filterelement 30, insbesondere der Filtermediumhalter 36, durch den Dichtsteg 28 verformt bzw. eingedrückt. Durch den erhöhten Anpreßdruck zwischen dem Filterelement 30 und dem ersten Filterkassettenteil 10 im Bereich des Dichtstegs 28 wird eine verbesserte Dichtwirkung erzielt.

Analog ist an der zweiten Filterelementanordnungsseite 52 des zweiten Filterkassettenteils 50, wie in Figur 8d gezeigt, zumindest ein Dichtsteg 68 ausgebildet. Der Dichtsteg 68 kann ebenfalls etwa 0,5 mm bis etwa 2 mm, bevorzugt etwa 1 mm, entlang der Anordnungsrichtung A über die zweite Filterelementanordnungsseite 52 des zweiten Filterkassettenteils 50 vorragen. Beim Anordnen des Filterelements 30 an das zweite Filterkassettenteil 50 kontaktiert das Filterelement 30 dann zunächst den vorragenden Dichtsteg 68. In der Anordnungsposition, wenn ein Anpreßdruck zwischen dem Filterelement 30 und dem zweiten Filterkassettenteil 50 anliegt, wird das aus einem rückstellfähigen Material ausgebildete Filterelement 30, insbesondere der Filtermediumhalter 36, durch den Dichtsteg 68 verformt bzw. eingedrückt. Durch den erhöhten Anpreßdruck zwischen dem Filterelement 30 und dem zweiten Filterkassettenteil 50 im Bereich des Dichtstegs 68 wird eine verbesserte Dichtwirkung erzielt.

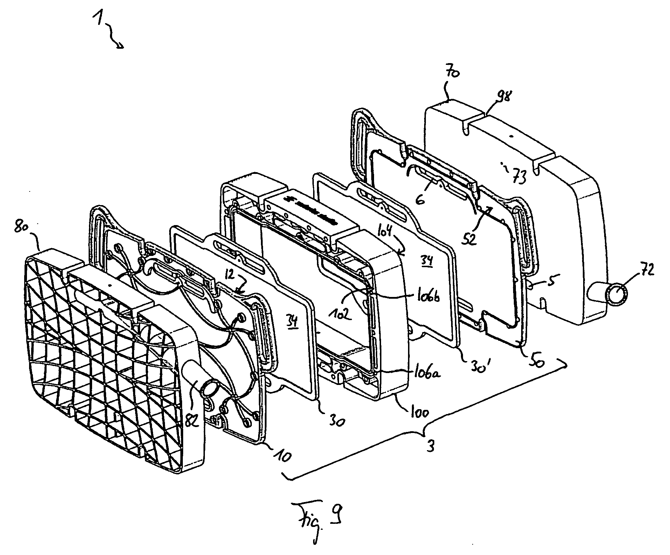

Die **Figur 9** zeigt eine perspektivische Explosionsansicht eines nicht erfindungsgemäßen Filtersystems 1 mit einem ersten Abschlußmodul 70 mit einem Fluidzulauf 72 und einem zweiten Abschlußmodul 80, welches zu dem ersten Abschlußmodul 70 identisch ausgebildet ist, mit einem Fluidablauf 82. Zwischen dem ersten Abschlußmodul 70 und dem zweiten Abschlußmodul 80 ist ein Filtermodul 3 angeordnet, welches ein erstes Filterkassettenteil 10, zwei Filterelemente 30, 30', ein zweites Filterkassettenteil 50, welches zu dem ersten Filterkassettenteil 10 identisch ausgebildet ist, und ein zwischen den beiden Filterelementen 30, 30' angeordnetes drittes Filterkassettenteil 100 umfaßt. Das Filtersystem 1 entspricht in seiner Funktion im wesentlichen der in den Figuren 6a bis 6c und 7 bzw. der in den Figuren 1a bis 1c und 2 gezeigten Ausführungsform, so daß entsprechende Elemente mit identischen Bezugszeichen versehen sind und zur Beschreibung der Funktion des Filtersystem 1 und dessen Bestandteile auf die Beschreibung der Figuren 1a bis 1c, 2, 6a bis 6c und 7 verwiesen wird.

Das zweite Filterelement 30' ist vorzugsweise identisch zu dem ersten Filterelement 30. Das erste Filterelement 30 ist in dieser Konfiguration an dem ersten Filterkassettenteil 10 angeordnet bzw. aufgenommen und das zweite Filterelement 30' ist an dem zweiten Filterkassettenteil 50 angeordnet bzw. aufgenommen. Das dritte Filterkassettenteil 100 ist zwischen dem ersten Filterelement 30 und dem zweiten Filterelement 30' angeordnet.

Bevorzugt weist das dritte Filterkassettenteil 100 eine dritte Filterelementanordnungsseite 102 auf, welche identisch zu der zweiten Filterelementanordnungsseite 52 des zweiten Filterkassettenteils 50 ist. Weiter bevorzugt weist das dritte Filterkassettenteil 100 eine vierte Filterelementanordnungsseite 104 auf, welche identisch zu der ersten Filterelementanordnungsseite 12 des ersten Filterkassettenteils 10 ist. Beispielsweise kann das dritte Filterkassettenteil 100 durch ein Verbinden oder ein gemeinsames Ausbilden eines ersten und zweiten Filterkassettenteils 10, 50 ausgebildet sein.

Mittels des dritten Filterkassettenteils 100 können zwei Filterelemente 30, 30' in einem einzigen Filtermodul 3 untergebracht sein. Dabei kann das dritte Filterkassettenteil 100 mit dem ersten und zweiten Filterkassettenteil 10, 50 in der Anordnungsposition mittels einer entsprechend angeordneten Rasteinrichtungen 106a und/oder komplementären Rasteinrichtungen 106b lösbar oder unlösbar miteinander verriegelt bzw. verrastet sein. Die Verriegelung zwischen dem ersten und zweiten Filterkassettenteil 10, 50 wird bevorzugt durch eine mittelbare Verriegelung über das dritte Filterkassettenteil 100 ersetzt. Es versteht sich, daß das erste, zweite und dritte Filterkassettenteil 10, 50, 100 auch gemeinsam mittels einer Verriegelungseinrichtung miteinander verriegelt werden können.

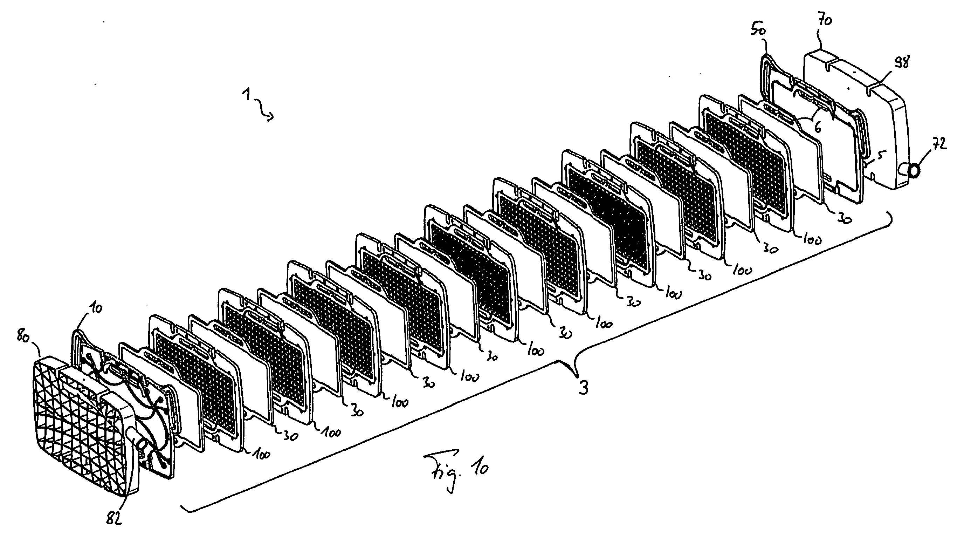

Die **Figur 10** zeigt eine perspektivische Explosionsansicht eines nicht erfindungsgemäßen Filtersystems 1 mit einem ersten Abschlußmodul 70 mit einem Fluidzulauf 72 und einem zweiten Abschlußmodul 80, welches zu dem ersten Abschlußmodul 70 identisch ausgebildet ist, mit einem Fluidablauf 82. Zwischen dem ersten Abschlußmodul 70 und dem zweiten Abschlußmodul 80 ist ein Filtermodul 3 angeordnet, welches ein erstes Filterkassettenteil 10, eine Vielzahl von Filterelementen 30, ein zweites Filterkassettenteil 50, welches zu dem ersten Filterkassettenteil 10 identisch ausgebildet ist, und jeweils zwischen zwei der Vielzahl von Filterelementen 30 angeordnetes drittes Filterkassettenteil 100 umfaßt. Somit entspricht die Anzahl der dritten Filterkassettenteile 100 der Anzahl der Filterelemente 30 minus einem.

Das Filtersystem 1 entspricht in seiner Funktion im wesentlichen dem in der Figur 9 dargestellten Filtersystem, wobei die Verwendung einer Vielzahl von identischen oder voneinander verschiedenen Filterelementen ermöglicht wird. Die mit Bezug auf die Figur 9 identischen Elemente sind mit identischen Bezugszeichen versehen, wobei zur Beschreibung dieser Elemente auf die zur Figur 9 zugehörige Beschreibung verwiesen wird.

### Bezugszeichenliste

- 1: Filtersystem
- 3, 3', 3": Filtermodul
- 5: Modulzulaufkanal
- 6: Modulablaufkanal
- 7: Modulentlüftungskanal
- 8: Moduldrainagekanal
- 10: erstes Filterkassettenteil
- 12: erste Filterelementanordnungsseite
- 14: erste Filterelementaufnahme
- 16: erster Kassettenzulaufkanal
- 18: Modulzulaufverbindungskanal
- 20: Retentatkammer
- 22: erster Kassettenablaufkanal
- 24: Filtermodulanschlußkonfiguration
- 26: erster Kassettenentlüftungskanal
- 27: erster Kassettendrainagekanal
- 28: Dichtsteg
- 30: Filterelement
- 32: Filtratseite
- 34: Filtermedium
- 34a: erste Lage des Filtermediums 34
- 34b: zweite Lage des Filtermediums 34
- 36: Filtermediumhalter
- 36a: erster Teil des Filtermediumhalters 36
- 36b: zweiter Teil des Filtermediumhalters 36
- 36c: Nut
- 37a: Filtermediumaufnahme
- 37b: Klemmbereich
- 38: Halterzulaufkanal
- 40: Halterablaufkanal
- 42: Halterentlüftungskanal
- 43: Halterdrainagekanal
- 50: zweites Filterkassettenteil
- 52: zweite Filterelementanordnungsseite
- 54: zweite Filterelementaufnahme
- 55a: Rastelement
- 55b: komplementäre Rastelement
- 56: zweiter Kassettenzulaufkanal
- 58: zweiter Kassettenablaufkanal
- 60: Modulablaufverbindungskanal
- 62: Filtratkammer
- 64: komplementäre Filtermodulanschlußkonfiguration
- 66: zweiter Kassettenentlüftungskanal
- 67: zweiter Kassettendrainagekanal
- 68: Dichtsteg
- 70: erstes Abschlußmodul
- 72: Fluidzulauf
- 74: erste komplementäre Filtermodulanschlußkonfiguration
- 76: Ablaßöffnung
- 80: zweites Abschlußmodul
- 82: Fluidablauf
- 84: zweite Filtermodulanschlußkonfigurationen
- 86: Entlüftungsöffnung
- 90: ersten Trennmodul
- 90': zweites Trennmodul
- 92, 92': Trenneinrichtung
- 94a, 94b: Dichtkontur, Dichtlippe
- 96a, 96b: Dichtungsbereich
- 98: Halteraufnahme
- 99: Griff
- 100: Filterkassettenteil
- 102: dritte Filterelementanordnungsseite
- 104: vierte Filterelementanordnungsseite
- 106a: Rasteinrichtung
- 106b: komplementäre Rasteinrichtung
- A: Anordnungsrichtung
- E: Einführrichtung
- F: Fluidfließrichtung
- K: Andruckkraft

## Patentansprüche

1. Modulares Filtersystem (1) umfassend:
- ein erstes Abschlußmodul (70),
- ein zweites Abschlußmodul (80) und
- eine Vielzahl von zwischen dem ersten und zweiten Abschlußmodul (70, 80) angeordneten Filtermodulen (3), welche jeweils umfassen:
- ein Filterelement (30) mit
-- zumindest einem Filtermedium (34), welches eine Filtratseite (32) und eine Retentatseite des Filterelements (30) voneinander trennt, und
-- einem Filtermediumhalter (36), an welchem das Filtermedium (34) befestigt ist und welcher zumindest einen Halterzulaufkanal (38) und zumindest einen Halterablaufkanal (40) aufweist,
- ein erstes Filterkassettenteil (10) mit zumindest einem ersten Kassettenzulaufkanal (16) und zumindest einem ersten Kassettenablaufkanal (22),
- ein zweites Filterkassettenteil (50) mit zumindest einem zweiten Kassettenzulaufkanal (56) und zumindest einem zweiten Kassettenablaufkanal (58),
wobei der Filtermediumhalter (36) in einer Anordnungsposition fluiddicht zwischen dem ersten Filterkassettenteil (10) und dem zweiten Filterkassettenteil (50) angeordnet ist,
wobei der zumindest eine Halterzulaufkanal (38) mit dem zumindest einen ersten Kassettenzulaufkanal (16) und dem zumindest einen zweiten Kassettenzulaufkanal (56) fluidisch verbunden ist, um einen Modulzulaufkanal (5) auszubilden,
wobei der zumindest eine Halterablaufkanal (40) mit dem zumindest einen ersten Kassettenablaufkanal (22) und dem zumindest einen zweiten Kassettenablaufkanal (58) fluidisch verbunden ist, um einen Modulablaufkanal (6) auszubilden,
wobei der Modulzulaufkanal (5) mit der Retentatseite des Filtermediums (34) fluidisch verbunden ist und
wobei der Modulablaufkanal (6) mit der Filtratseite (32) des Filtermediums (34) fluidisch verbunden ist;
wobei der Modulzulaufkanal (5) des zumindest einen Filtermoduls (3) mit einem Fluidzulauf (72) des ersten und/oder zweiten Abschlußmoduls (70, 80) fluidisch verbunden ist und
wobei der Modulablaufkanal (6) des zumindest einen Filtermoduls (3) mit einem Fluidablauf (82) des ersten und/oder zweiten Abschlußmoduls (70, 80) fluidisch verbunden ist;
**dadurch gekennzeichnet, dass** das Filtersystem (1) ferner umfasst:
- ein erstes Filtermodul (3),
- ein zweites Filtermodul (3'), und
- ein Trennmodul (90), welches den Modulzulaufkanal (5) des ersten Filtermoduls (3) in Richtung des zweiten Filtermoduls (3') verschließt, den Modulablaufkanal (6) des ersten Filtermoduls (3) mit dem Modulzulaufkanal (5') des zweiten Filtermoduls (3') fluidisch verbindet und den Modulablaufkanal (6') des zweiten Filtermoduls (3') in Richtung des ersten Filtermoduls (3) verschließt

2. Modulares Filtersystem (1) umfassend:
- ein erstes Abschlußmodul (70),
- ein zweites Abschlußmodul (80) und
- eine Vielzahl von zwischen dem ersten und zweiten Abschlußmodul (70, 80) angeordneten Filtermodulen (3), welche jeweils umfassen:
- ein Filterelement (30) mit
-- zumindest einem Filtermedium (34), welches eine Filtratseite (32) und eine Retentatseite des Filterelements (30) voneinander trennt, und
-- einem Filtermediumhalter (36), an welchem das Filtermedium (34) befestigt ist und welcher zumindest einen Halterzulaufkanal (38) und zumindest einen Halterablaufkanal (40) aufweist,
- ein erstes Filterkassettenteil (10) mit zumindest einem ersten Kassettenzulaufkanal (16) und zumindest einem ersten Kassettenablaufkanal (22),
- ein zweites Filterkassettenteil (50) mit zumindest einem zweiten Kassettenzulaufkanal (56) und zumindest einem zweiten Kassettenablaufkanal (58),
wobei der Filtermediumhalter (36) in einer Anordnungsposition fluiddicht zwischen dem ersten Filterkassettenteil (10) und dem zweiten Filterkassettenteil (50) angeordnet ist,
wobei der zumindest eine Halterzulaufkanal (38) mit dem zumindest einen ersten Kassettenzulaufkanal (16) und dem zumindest einen zweiten Kassettenzulaufkanal (56) fluidisch verbunden ist, um einen Modulzulaufkanal (5) auszubilden,
wobei der zumindest eine Halterablaufkanal (40) mit dem zumindest einen ersten Kassettenablaufkanal (22) und dem zumindest einen zweiten Kassettenablaufkanal (58) fluidisch verbunden ist, um einen Modulablaufkanal (6) auszubilden,
wobei der Modulzulaufkanal (5) mit der Retentatseite des Filtermediums (34) fluidisch verbunden ist und
wobei der Modulablaufkanal (6) mit der Filtratseite (32) des Filtermediums (34) fluidisch verbunden ist;
wobei der Modulzulaufkanal (5) des zumindest einen Filtermoduls (3) mit einem Fluidzulauf (72) des ersten und/oder zweiten Abschlußmoduls (70, 80) fluidisch verbunden ist und
wobei der Modulablaufkanal (6) des zumindest einen Filtermoduls (3) mit einem Fluidablauf (82) des ersten und/oder zweiten Abschlußmoduls (70, 80) fluidisch verbunden ist;
**dadurch gekennzeichnet, dass** das Filtersystem (1) ferner umfasst:
- ein erstes Filtermodul (3),
- ein zweites Filtermodul (3'), und
- eine Trenneinrichtung (92), welche den Modulzulaufkanal (5) des ersten Filtermoduls (3) verschließt, um den Modulzulaufkanal (5) des ersten Filtermoduls (3) von dem daran angrenzenden Modulablaufkanal (6') des zweiten Filtermoduls (3') zu trennen.

3. Filtersystem (1) nach Anspruch 1 oder 2, wobei das erste Filterkassettenteil (10) und das zweite Filterkassettenteil (50) mittels einer Verriegelungseinrichtung verriegelbar sind.

4. Filtersystem (1) nach einem der vorangehenden Ansprüche, wobei das Elastizitätsmodul und/oder das Schermodul des ersten Filterkassettenteils (10) und/oder des zweiten Filterkassettenteils (50) größer als das Elastizitätsmodul und/oder das Schermodul des Filtermediumhalters (36) ist.

5. Filtersystem (1) nach einem der vorigen Ansprüche, wobei das erste Filterkassettenteil (10) eine erste Filterelementaufnahme (14) und/oder das zweite Filterkassettenteil (50) eine zweite Filterelementaufnahme (54) aufweisen, in welche der Filtermediumhalter (36) zumindest bereichsweise entlang einer Anordnungsrichtung (A) aufnehmbar ist.

6. Filtersystem (1) nach Anspruch 5, wobei die erste und/oder zweite Filterelementaufnahme (14, 54) derart ausgebildet sind, daß das erste Filterkassettenteil (10) und das zweite Filterkassettenteil (50) in der Anordnungsposition durch den Filtermediumhalter (36) voneinander beabstandet sind.

7. Filtersystem (1) nach einem der vorigen Ansprüche, wobei das Filtermedium (34) kraftschlüssig und/oder formschlüssig an dem Filtermediumhalter (36) angeordnet ist.

8. Filtersystem (1) nach einem der vorigen Ansprüche, wobei der Filtermediumhalter (36) aus einem rückstellfähigen elastischen Material ausgebildet ist.

9. Filtersystem (1) nach Anspruch 8, wobei das Filtermedium (34) in dem Filtermediumhalter (36) eingeklemmt ist, wobei durch das rückstellfähige Material des Filtermediumhalters (36) eine Anpreßkraft auf das Filtermedium (34) angelegt ist.

10. Filtersystem (1) nach einem der vorigen Ansprüche, wobei das Filtermedium (34) durch Verschmelzen oder Vergießen eines Bereiches des Filtermediums (34) mit einem Bereich des Filtermediumhalters (36) an dem Filtermediumhalter (36) befestigt ist.

11. Filtersystem (1) nach einem der vorigen Ansprüche, wobei das Filtermodul (3) weiter umfasst:
- ein drittes Filterkassettenteil (100) und
- ein zweites Filterelement (30'),
wobei das erste Filterelement (30) an dem ersten Filterkassettenteil (10) und das zweite Filterelement (30') an dem zweiten Filterkassettenteil (50) angeordnet ist und
wobei das dritte Filterkassettenteil (100) zwischen dem ersten Filterelement (30) und dem zweiten Filterelement (30') angeordnet ist.

12. Filtersystem nach Anspruch 11, wobei zwischen dem ersten und dem zweiten Filterelement (30, 30') zwei oder mehrere dritte Filterkassettenteile (100) angeordnet sind, wobei jedem der dritten Filterkassettenteile ein zusätzliches Filterelement zugeordnet ist.

## Claims

1. Modular filter system (1) comprising:
- a first termination module (70),
- a second termination module (80) and
- a plurality of filter modules (3) arranged between the first and second termination module (70, 80), each comprising:
∘ a filter element (30) with
▪ at least one filter medium (34) separating a filtrate side (32) from a retentate side of the filter element (30), and
▪ a filter medium support (36) on which the filter medium (34) is attached and which at least has one support inlet channel (38) and at least one support discharge channel (40),
∘ a first filter cassette part (10) with at least one first cassette inlet channel (16) and at least one first cassette discharge channel (22),
∘ a second filter cassette part (50) with at least one second cassette inlet channel (56) and at least one second cassette discharge channel (58),
the filter medium support (36) being fluid-tightly arranged in an arrangement position between the first filter cassette part (10) and the second filter cassette part (50),
the at least one support inlet channel (38) being fluidically connected to the at least one first cassette inlet channel (16) and the at least one second cassette inlet channel (56) in order to form a module inlet channel (5),
the at least one support discharge channel (40) being fluidically connected to the at least one first cassette discharge channel (22) and the at least one second cassette discharge channel (58) in order to form a module discharge channel (6),
the module inlet channel (5) being fluidically connected to the retentate side of the filter medium (34) and
the module discharge channel (6) being fluidically connected to the filtrate side (32) of the filter medium (34);
the module inlet channel (5) of the at least one filter module (3) being fluidically connected to a fluid inlet (72) of the first and/or second termination module (70, 80) and
the module discharge channel (6) of the at least one filter module (3) being fluidically connected to a fluid discharge (82) of the first and/or second termination module (70, 80);
**characterized in that** the filter system (1) further comprises:
- a first filter module (3),
- a second filter module (3'), and
- a separation module (90) which closes the module inlet channel (5) of the first filter module (3) in the direction of the second filter module (3'), fluidically connects the module discharge channel (6) of the first filter module (3) to the
module inlet channel (5') of the second filter module (3') and closes the module discharge channel (6') of the second filter module (3') in the direction of the first filter module (3).

2. Modular filter system (1) comprising:
- a first termination module (70),
- a second termination module (80) and
- a plurality of filter modules (3) arranged between the first and second termination module (70, 80), each comprising:
∘ a filter element (30) with
▪ at least one filter medium (34) separating a filtrate side (32) from a retentate side of the filter element (30), and
▪ a filter medium support (36) on which the filter medium (34) is attached and which at least has one support inlet channel (38) and at least one support discharge channel (40),
∘ a first filter cassette part (10) with at least one first cassette inlet channel (16) and at least one first cassette discharge channel (22),
∘ a second filter cassette part (50) with at least one second cassette inlet channel (56) and at least one second cassette discharge channel (58),
the filter medium support (36) being fluid-tightly arranged in an arrangement position between the first filter cassette part (10) and the second filter cassette part (50),
the at least one support inlet channel (38) being fluidically connected to the at least one first cassette inlet channel (16) and the at least one second cassette inlet channel (56) in order to form a module inlet channel (5),
the at least one support discharge channel (40) being fluidically connected to the at least one first cassette discharge channel (22) and the at least one second cassette discharge channel (58) in order to form a module discharge channel (6),
the module inlet channel (5) being fluidically connected to the retentate side of the filter medium (34) and
the module discharge channel (6) being fluidically connected to the filtrate side (32) of the filter medium (34);
the module inlet channel (5) of the at least one filter module (3) being fluidically connected to a fluid inlet (72) of the first and/or second termination module (70, 80) and
the module discharge channel (6) of the at least one filter module (3) being fluidically connected to a fluid discharge (82) of the first and/or second termination module (70, 80);
**characterized in that** the filter system (1) further comprising:
- a first filter module (3),
- a second filter module (3'), and
- a separation module (92) which closes the module inlet channel (5) of the first filter module (3) in order to separate the module inlet channel (5) of the first filter module (3) from the adjacent module discharge channel (6') of the second filter module (3').

3. Filter system (1) according to claim 1 or 2, wherein the first filter cassette part (10) and the second filter cassette part (50) are lockable by means of a locking device.

4. Filter system (1) according to any of the preceding claims wherein the elastic modulus and/or the shear modulus of the first filter cassette part (10) and/or the second filter cassette part (50) is greater than the elastic modulus and/or the shear modulus of the filter medium support (36).

5. Filter system (1) according to any of the preceding claims wherein the first filter cassette part (10) has a first filter element receptacle (14) and/or the second filter cassette part (50) has a second filter element receptacle (54) which can receive the filter medium support (36) at least in some areas along an arrangement direction (A).

6. Filter system (1) according to claim 5 wherein the first and/or second filter element receptacle (14, 54) are formed in such a way that in the arrangement position the first filter cassette part (10) and the second filter cassette part (50) are spaced apart from each other by means of the filter medium support (36).

7. Filter system (1) according to any of the preceding claims wherein the filter medium (34) is arranged at the filter medium support (36) by force fitting and/or form fitting.

8. Filter system (1) according to any of the preceding claims wherein the filter medium support (36) is made of a resilient elastic material.

9. Filter system (1) according to claim 8 wherein the filter medium (34) is clamped in the filter medium support (36), a contact pressure being applied on the filter medium (34) by means of the resilient material of the filter medium support (36).

10. Filter system (1) according to any of the preceding claims wherein the filter medium (34) is attached to the filter medium support (36) by means of amalgamating or casting a part of the filter medium (34) with a a part of the filter medium support (36).

11. Filter system (1) according to any of the preceding claims, the filter module (3) further comprising:
- a third filter cassette part (100) and
- a second filter element (30'),
the first filter element (30) being arranged at the first filter cassette part (10) and the second filter element (30') at the second filter cassette part (50) and
the third filter cassette part (100) being arranged between the first filter element (30) and the second filter element (30').

12. Filter system (1) according to claim 11 wherein between the first and the second filter element (30, 30') two or more third filter cassette parts (100) are arranged, an additional filter element being assigned to each of the third filter cassette parts.

## Revendications

1. Système de filtre modulaire (1) comprenant :
- un premier module de fermeture (70),
- un second module de fermeture (80) et
- une pluralité de modules de filtre (3) disposés entre les premier et second modules de fermeture (70, 80) qui comprennent chacun :
- un élément de filtre (30) avec
-- au moins un milieu de filtre (34) qui sépare l'un de l'autre un côté filtrat (32) et un côté rétentat de l'élément de filtre (30), et
-- un support de milieu de filtre (36) sur lequel le milieu de filtre (34) est fixé et qui présente au moins un canal d'amenée de support (38) et au moins un canal de sortie de support (40),
- une première partie de cartouche de filtre (10) avec au moins un premier canal d'amenée de cartouche (16) et au moins un premier canal de sortie de cartouche (22),
- une deuxième partie de cartouche de filtre (50) avec au moins un second canal d'amenée de cartouche (56) et au moins un second canal de sortie de cartouche (58),
dans lequel le support de milieu de filtre (36) est disposé de manière étanche au fluide dans une position d'agencement entre la première partie de cartouche de filtre (10) et la deuxième partie de cartouche de filtre (50),
dans lequel l'au moins un canal d'amenée de support (38) est relié de manière fluidique à l'au moins un premier canal d'amenée de cartouche (16) et l'au moins un second canal d'amenée de cartouche (56) pour réaliser un canal d'amenée de module (5),
dans lequel l'au moins un canal de sortie de support (40) est relié de manière fluidique à l'au moins un premier canal de sortie de cartouche (22) et l'au moins un second canal de sortie de cartouche (58) pour réaliser un canal de sortie de module (6),
dans lequel le canal d'amenée de module (5) est relié de manière fluidique au côté rétentat du milieu de filtre (34) et
dans lequel le canal de sortie de module (6) est relié de manière fluidique au côté filtrat (32) du milieu de filtre (34) ;
dans lequel le canal d'amenée de module (5) de l'au moins un module de filtre (3) est relié de manière fluidique à une amenée de fluide (72) du premier et/ou second module de fermeture (70, 80) et
dans lequel le canal de sortie de module (6) de l'au moins un module de filtre (3) est relié de manière fluidique à une sortie de fluide (82) du premier et/ou second module de fermeture (70, 80) ;
**caractérisé en ce que** le système de filtre (1) comprend en outre :
- un premier module de filtre (3),
- un second module de filtre (3'), et
- un module de séparation (90) qui ferme le canal d'amenée de module (5) du premier module de filtre (3) en direction du second module de filtre (3'), relie de manière fluidique le canal de sortie de module (6) du premier module de filtre (3) au canal d'amenée de module (5') du second module de filtre (3') et ferme le canal de sortie de module (6') du second module de filtre (3') en direction du premier module de filtre (3).

2. Système de filtre modulaire (1) comprenant :
- un premier module de fermeture (70),
- un second module de fermeture (80) et
- une pluralité de modules de filtre (3) disposés entre les premier et second modules de fermeture (70, 80) qui comprennent chacun :
- un élément de filtre (30) avec
-- au moins un milieu de filtre (34) qui sépare l'un de l'autre un côté filtrat (32) et un côté rétentat de l'élément de filtre (30), et
-- un support de milieu de filtre (36) sur lequel le milieu de filtre (34) est fixé et qui présente au moins un canal d'amenée de support (38) et au moins un canal de sortie de support (40),
- une première partie de cartouche de filtre (10) avec au moins un premier canal d'amenée de cartouche (16) et au moins un premier canal de sortie de cartouche (22),
- une deuxième partie de cartouche de filtre (50) avec au moins un second canal d'amenée de cartouche (56) et au moins un second canal de sortie de cartouche (58),
dans lequel le support de milieu de filtre (36) est disposé de manière étanche au fluide dans une position d'agencement entre la première partie de cartouche de filtre (10) et la deuxième partie de cartouche de filtre (50),
dans lequel l'au moins un canal d'amenée de support (38) est relié de manière fluidique à l'au moins un premier canal d'amenée de cartouche (16) et l'au moins un second canal d'amenée de cartouche (56) pour réaliser un canal d'amenée de module (5),
dans lequel l'au moins un canal de sortie de support (40) est relié de manière fluidique à l'au moins un premier canal de sortie de cartouche (22) et l'au moins un second canal de sortie de cartouche (58) pour réaliser un canal de sortie de module (6),
dans lequel le canal d'amenée de module (5) est relié de manière fluidique au côté rétentat du milieu de filtre (34) et
dans lequel le canal de sortie de module (6) est relié de manière fluidique au côté filtrat (32) du milieu de filtre (34) ;
dans lequel le canal d'amenée de module (5) de l'au moins un module de filtre (3) est relié de manière fluidique à une amenée de fluide (72) du premier et/ou second module de fermeture (70, 80) et
dans lequel le canal de sortie de module (6) de l'au moins un module de filtre (3) est relié de manière fluidique à une sortie de fluide (82) du premier et/ou second module de fermeture (70, 80) ;
**caractérisé en ce que** le système de filtre (1) comprend en outre :
- un premier module de filtre (3),
- un second module de filtre (3'), et
- un dispositif de séparation (92) qui ferme le canal d'amenée de module (5) du premier module de filtre (3) pour séparer le canal d'amenée de module (5) du premier module de filtre (3) du canal de sortie de module adjacent à celui-ci (6') du second module de filtre (3').

3. Système de filtre (1) selon la revendication 1 ou 2, dans lequel la première partie de cartouche de filtre (10) et la deuxième partie de cartouche de filtre (50) peuvent être verrouillées au moyen d'un dispositif de verrouillage.

4. Système de filtre (1) selon une des revendications précédentes, dans lequel le module d'élasticité et/ou le module de cisaillement de la première partie de cartouche de filtre (10) et/ou de la deuxième partie de cartouche de filtre (50) est supérieur au module d'élasticité et/ou au module de cisaillement du support de milieu de filtre (36).

5. Système de filtre (1) selon une des revendications précédentes, dans lequel la première partie de cartouche de filtre (10) présente un premier logement d'élément de filtre (14) et/ou la deuxième partie de cartouche de filtre (50) présente un second logement d'élément de filtre (54) dans lequel le support de milieu de filtre (36) peut être logé au moins par région le long d'une direction d'agencement (A).

6. Système de filtre (1) selon la revendication 5, dans lequel le premier et/ou second logement d'élément de filtre (14, 54) sont réalisés de telle sorte que la première partie de cartouche de filtre (10) et la deuxième partie de cartouche de filtre (50) sont écartées l'une de l'autre par le support de milieu de filtre (36) dans la position d'agencement.

7. Système de filtre (1) selon une des revendications précédentes, dans lequel le milieu de filtre (34) est disposé par adhérence et/ou par conjugaison de formes sur le support de milieu de filtre (36).

8. Système de filtre (1) selon une des revendications précédentes, dans lequel le support de milieu de filtre (36) est réalisé en un matériau élastique capable de rappel.

9. Système de filtre (1) selon la revendication 8, dans lequel le milieu de filtre (34) est serré dans le support de milieu de filtre (36), dans lequel une force de pression est appliquée sur le milieu de filtre (34) par le matériau capable de rappel du support de milieu de filtre (36).

10. Système de filtre (1) selon une des revendications précédentes, dans lequel le milieu de filtre (34) est fixé au support de milieu de filtre (36) par fonte ou coulée d'une région du milieu de filtre (34) avec une région du support de milieu de filtre (36).

11. Système de filtre (1) selon une des revendications précédentes, dans lequel le module de filtre (3) comprend en outre :
- une troisième partie de cartouche de filtre (100) et
- un second élément de filtre (30'),
dans lequel le premier élément de filtre (30) est disposé sur la première partie de cartouche de filtre (10) et le second élément de filtre (30') est disposé sur la deuxième partie de cartouche de filtre (50), et
dans lequel la troisième partie de cartouche de filtre (100) est disposée entre le premier élément de filtre (30) et le second élément de filtre (30').

12. Système de filtre selon la revendication 11, dans lequel deux troisièmes parties de cartouche de filtre (100) ou plus sont disposées entre le premier et le second élément de filtre (30, 30'), dans lequel un élément de filtre supplémentaire est associé à chacune des troisièmes parties de cartouche de filtre.
